(19) Europäisches Patentamt
European Patent Office
Office européen des brevets

(11) **EP 4 725 445 A1**

(12) **EUROPEAN PATENT APPLICATION**

(43) Date of publication:
**15.04.2026 Bulletin 2026/16**

(21) Application number: **24206451.7**

(22) Date of filing: **14.10.2024**

(51) International Patent Classification (IPC):
**A61C 1/16** (2006.01)   **A61C 9/00** (2006.01)

(52) Cooperative Patent Classification (CPC):
**A61C 1/16; A61C 9/0053**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **3Shape A/S**
**1060 Copenhagen K (DK)**

(72) Inventors:
• **SUNDBERG, Oliver**
  **1060 Copenhagen K (DK)**
• **JAKOBSEN, Peter Dirch**
  **1060 Copenhagen k (DK)**

(74) Representative: **Zacco Denmark A/S**
**Arne Jacobsens Allé 15**
**2300 Copenhagen S (DK)**

(54) **A SHEATH FOR AN INTRAORAL SCANNER**

(57) Disclosed is a method for manufacturing a sheath comprising a sheath body, a heat conducting element, and an optical element, the sheath being configured for covering the tip of an intraoral scanner, the method comprising the steps of: arranging the heat conducting element over a core of the mold; inserting the core into a mold matrix to create a mold cavity defined by the core and the matrix, wherein the mold cavity has the shape of the sheath body; injecting a polymer into the mold cavity whereby the sheath body is molded over the heat conducting element; and attaching the optical element to an optical element contacting portion of the heat conducting element. Further disclosed is a sheath resulting from this method.

FIG. 3

**Description**

**Technical field**

The disclosure relates to a sheath for covering the tip of an intraoral scanner, a heat conducting element for a sheath for covering the tip of an intraoral scanner, and a method for manufacturing a sheath for covering the tip of an intraoral scanner.

**Background**

Within the field of digital dentistry, intraoral scanners are growing increasingly popular with dentists as the method of choice for obtaining a digital 3D representation of patients' teeth. By using an intraoral scanner rather than traditional methods, inconveniences such as taking dental impressions to manufacture a mold of a patient's teeth can be avoided leading to a quicker dental workflow thereby saving time, and thus also costs, for both patients and dentist.

The scanning procedure when using an intraoral scanner comprises inserting a probe end of the scanner into the patient's mouth in order to acquire multiple 2D images which can be processed into 3D data. For hygiene purposes, most intraoral scanners are configured for having a sheath, sometimes also referred to as a tip or hygienic barrier, mounted over their tip, i.e. the probe end, so that the sheath can be replaced between patients rather than having to disinfect the intraoral scanner between each patient.

To allow the intraoral scanner to acquire 2D images through the sheath, the sheath typically comprises an optical component such as a window or a mirror. Such optical components must be heated in order to avoid fogging when the sheath is inserted into the warm humid environment of the patient's mouth. The heating is often accomplished by providing active heating, e.g. in the form of a heating element in the intraoral scanner driven by the scanner's power supply, to heat the optical element of the sheath.

As the sheath itself is often made by polymers which have a relatively low heat conduction, it is required to provide a heat conducting element in the sheath to transfer heat from the heating element of the intraoral scanner to the optical element. This adds additional production and assembly steps to the manufacturing process, leading to added costs. There is thus a need for a more cost-efficient sheath and method for manufacturing such a sheath.

Furthermore, for sheaths intended for multiple uses, e.g. sheaths configured for autoclaving, the attachment between the sheath body and the heat conducting element may be prone to breaking, either through repeated use, dropping, or the relatively harsh conditions of the cleaning process needed to prepare a sheath for the next patient after use. There is therefore a need for a more durable sheath and method for manufacturing such a sheath.

**Summary**

The above needs and others are addressed by the following aspects.

A first aspect of the present disclosure is a sheath for covering the tip of an intraoral scanner. The sheath comprises a sheath body. The sheath body comprises a proximal end having a proximal opening configured for receiving the tip. The sheath body comprises a distal end having a distal end wall. The sheath body comprises a sidewall extending between the proximal and distal ends, the sidewall and the distal end wall defining an internal cavity configured for at least partially accommodating the tip. The sheath body comprises an optical opening arranged at the distal end or in the sidewall. The sheath comprises an optical element arranged so that is in an optical path of the intraoral scanner when the sheath is mounted on the tip. The sheath comprises a heat conducting element in contact with the optical element, the heat conducting element being configured for contacting a heating element of the intraoral scanner and conducting heat from the heating element to the optical element. The sheath body comprises one or more overhanging protrusions formed integrally with the sheath body, wherein the one or more overhanging protrusions extend over at least part of the heat conducting element, wherein the heat conducting element is retained by the sidewall and/or the distal end wall and the one or more overhanging protrusions.

A second aspect of the present disclosure is a sheath for covering the tip of an intraoral scanner. The sheath comprises a sheath body. The sheath body comprises a proximal end having a proximal opening configured for receiving the tip. The sheath body comprises a distal end having a distal end wall. The sheath body comprises a sidewall extending between the proximal and distal ends, the sidewall and the distal end wall defining an internal cavity configured for at least partially accommodating the tip. The sheath body comprises an optical opening arranged at the distal end or in the sidewall. The sheath comprises an optical element arranged so that is in an optical path of the intraoral scanner when the sheath is mounted on the tip. The sheath body is made from a material, preferably a material comprising a polymer, having a thermal conductivity above $3 \frac{W}{m \cdot K}$ at 25 degrees Celsius. The sheath body is configured for contacting a heating element of the intraoral scanner and conducting heat from the heating element to the optical element.

A third aspect of the disclosure is an intraoral scanner. The intraoral scanner comprises one or more projector unit(s) configured for projecting probe light onto a dental object. The intraoral scanner comprises one or more camera unit(s) configured for capturing 2D images of the dental object. The intraoral scanner comprises a scanner body housing the one or more projector unit(s) and the one or more camera unit(s). The scanner body comprises a scanner tip configured for being at least partially inserted into the mouth of a patient. The intraoral scanner comprises a heating element. The intraoral scanner comprises a sheath according to the first and/or second aspect of the invention.

A fourth aspect of the disclosure is a scanner system for obtaining a digital 3D representation of a dental object. The scanner system comprises an intraoral scanner according to the third aspect of the invention. The scanner system comprises one or more processor(s) configured for generating the digital 3D representation of the dental object based on the 2D images.

A further aspect of the present disclosure is a heat conducting element for a sheath for covering the tip of an intraoral scanner, the heat conducting element comprising a metal body. The metal body comprises a first surface configured for facing an internal surface of a distal end wall of the sheath and/or for facing an internal surface of a sidewall of the sheath. The metal body comprises a second surface configured for facing an internal cavity of the sheath, wherein the second surface comprises one or more sloped or curved edges. The metal body comprises an optical element contacting portion configured for contacting an optical element of the sheath. The metal body comprises a heating element contacting portion configured for contacting a heating element of the intraoral scanner.

A further aspect of the present disclosure is a method for manufacturing a sheath comprising a sheath body, a heat conducting element, and an optical element, the sheath being configured for covering the tip of an intraoral scanner. The method comprises the step of arranging the heat conducting element over a core of the mold. The method comprises the step of inserting the core into a mold matrix to create a mold cavity defined by the core and the matrix, wherein the mold cavity has the shape of the sheath body. The method comprises the step of injecting a polymer into the mold cavity whereby the sheath body is molded over the heat conducting element. The method comprises the step of attaching the optical element to an optical element contacting portion of the heat conducting element.

## Brief description of the drawings

The above and other features and advantages of the present invention will become readily apparent to those skilled in the art by the following detailed description of exemplary embodiments thereof with reference to the attached drawings, in which:

FIG. 1 shows a perspective view of an intraoral scanner with a sheath attached,

FIG. 2 shows a perspective view of an intraoral scanner with a sheath being attached,

FIG. 3 shows a perspective view with a transparent section of a sheath,

FIG. 4 shows an exploded view of a tip of an intraoral scanner and a sheath,

FIG. 5 shows an exploded view of a sheath,

FIG. 6 shows a perspective view with a transparent section of a sheath,

FIG. 7 shows a perspective view of a sheath,

FIG. 8 shows a perspective view with a transparent section of a sheath,

FIG. 9 shows a perspective view of a sheath,

FIG. 10 shows a graph of the heat conductivity of PSU composites,

FIG. 11 shows a perspective view of a sheath,

FIG. 12 shows a perspective view with a transparent section of a sheath,

FIG. 13a-d show perspective views of various embodiments of a heat conducting element,

FIG. 14 shows a perspective view of a heat conducting element,

FIG. 15a and 15b show different views of a heat conducting element,

FIG. 16a-e are technical drawings of a heat conducting element,

FIG. 17 shows a perspective view of the distal end of a sheath with the sheath body shown transparently,

FIG. 18 shows a schematic cross-section of the sheath body and heat conducting element,

FIG. 19 shows a cross-sectional view of a mold during a step of the molding process of a sheath,

FIG. 20 shows a cross-sectional view of a mold during a step of the molding process of a sheath,

FIG. 21 shows a cross-sectional view of a mold during a step of the molding process of a sheath,

FIG. 22 shows a cross-sectional view of a mold during a step of the molding process of a sheath,

FIG. 23 shows a cross-sectional view of a mold with temperature regulating means,

FIG. 24 shows a block diagram of a scanning system, and

FIG. 25 shows a flowchart of a molding process.

## Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the devices, systems, mediums, programs and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microprocessors, microcontrollers, digital signal processors (DSPs), field programmable gate arrays (FPGAs), programmable logic devices (PLDs), gated logic, discrete hardware circuits, and other suitable hardware configured to perform the various functionality described throughout this disclosure. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

A scanning of a dental object for providing intraoral scan data may be performed by a dental scanning system that may include an intraoral scanner such as the TRIOS series scanners from 3Shape A/S. The scanning system may include a wireless capability as provided by a wireless network unit. The intraoral scanner may employ a scanning principle such as triangulation-based scanning, confocal scanning, focus scanning, ultrasound scanning, x-ray scanning, stereo vision, structure from motion, optical coherent tomography OCT, or any other scanning principle.

The intraoral scanner comprises one or more projector unit(s) configured to generate an illumination pattern to be projected on a three-dimensional dental object during a scanning session. The projector unit(s) preferably comprises a light source, a mask having a spatial pattern, and one or more lenses such as collimation lenses or projection lenses. The light source may be configured to generate light of a single wavelength (monochromatic) or a combination or distribution of wavelengths (polychromatic). The combination or distribution of wavelengths may be produced by using a light source configured to produce light (such as white light) comprising different wavelengths. Alternatively, the projector unit(s) may comprise multiple light sources such as LEDs individually producing light of different wavelengths (such as red, green, and blue) that may be combined to form light comprising the different wavelengths. Thus, the light produced by the light source may be defined by a wavelength defining a specific color, or a range of different wavelengths defining a combination of colors such as white light. In an embodiment, the scanning device comprises a light source configured for exciting fluorescent material of the teeth to obtain fluorescence data from the dental object. Such a light source may be configured to produce a narrow range of wavelengths. In another embodiment, the light from the light source is infrared (IR) light, which is capable of penetrating dental tissue. The light projector(s) may be DLP projectors using a micro mirror array for generating a time varying pattern, or a diffractive optical element (DOF), or back-lit mask projectors, wherein the light source is placed behind a mask having a spatial pattern, whereby the light projected on the surface of the dental object is patterned. The back-lit mask projector may comprise a collimation lens for collimating the light from the light source, said collimation lens being placed between the light source and the mask. The mask may have a checkerboard pattern, such that the generated illumination pattern is a checkerboard pattern. Alternatively, the mask may feature other patterns such as lines or dots, etc.

The light reflected from the dental object in response to the illumination of the dental object is directed, using optical elements of the intraoral scanner and/or optical elements of the sheath, towards one or more camera unit(s). The camera unit(s) are configured to generate a plurality of 2D images based on the incoming light received from the illuminated dental object. The camera unit(s) may be a high-speed image sensor such as an image sensor configured for acquiring images with exposures of less than 1/1000 second or frame rates in excess of 250 frames pr. second (fps). As an example, the camera unit(s) may be rolling shutter (CCD) or global shutter (CMOS) camera unit(s). The camera unit(s) may be a monochrome sensor including a color filter array such as a Bayer filter and/or additional filters that may be configured to substantially remove one or more color components from the reflected light and retain only the other non-removed components prior to conversion of the reflected light into an electrical signal. For example, such additional filters may be used to remove a certain part of a white light spectrum, such as a blue component, and retain only red and green components from a signal generated in response to exciting fluorescent material of the teeth.

The network unit may be configured to connect the dental scanning system to a network comprising a plurality of network elements including at least one network element configured to receive the processed data. The network unit may include a wireless network unit or a wired network unit. The wireless network unit is configured to wirelessly connect the dental scanning system to the network comprising the plurality of network elements including the at least one network element configured to receive the processed data. The wired network unit is configured to establish a wired connection between the dental scanning system and the network comprising the plurality of network elements including the at least one network element configured to receive the processed data.

The dental scanning system preferably further comprises one or more processor(s) configured to generate scan data by processing the two-dimensional (2D) images acquired by the scanning device. The processor may be part of the scanning device. As an example, the processor may comprise a Field-programmable gate array (FPGA) and/or an Advanced RISC Machines (ARM) processor located on the scanning device. The scan data comprises information relating to the three-dimensional dental object. The scan data may comprise any of: 2D images, 3D point clouds, depth data, texture data, intensity data, color data, and/or combinations thereof. As an example, the scan data may comprise one or more point clouds, wherein each point cloud comprises a set of 3D points describing the three-dimensional dental object. As another example, the scan data may comprise images, each image comprising image data e.g. described by image coordinates and a timestamp (x, y, t), wherein depth information can be inferred from the timestamp. The camera unit(s) of the scanning device may acquire a plurality of raw 2D images of the dental object in response to illuminating said object using the one or more light projectors. The plurality of raw 2D images may also be referred to herein as a stack of 2D images. The 2D images may subsequently be provided as input to the processor, which processes the 2D images to generate scan data. The processing of the 2D images may comprise the step of determining which part of each of the 2D images are in focus in order to deduce/generate depth information from the images. The depth information may be used to generate 3D point clouds comprising a set of 3D points in space, e.g., described by cartesian coordinates (x, y, z). The 3D point clouds may be generated by the processor or by another processing unit. Each 2D/3D point may furthermore comprise a timestamp that indicates when the 2D/3D point was recorded, i.e., from which image in the stack of 2D images the point originates. The timestamp is correlated with the z-coordinate of the 3D points, i.e., the z-coordinate may be inferred from the timestamp. Accordingly, the output of the processor is the scan data, and the scan data may comprise image data and/or depth data, e.g. described by image coordinates and a timestamp (x, y, t) or alternatively described as (x, y, z). The scanning device may be configured to transmit other types of data in addition to the scan data. Examples of data include 3D information, texture information such as infra-red (IR) images, fluorescence images, reflectance color images, x-ray images, and/or combinations thereof.

Disclosed is a sheath for covering the tip of an intraoral scanner, wherein the sheath comprises: a sheath body comprising a proximal end having a proximal opening configured for receiving the tip, a distal end having a distal end wall, a sidewall extending between the proximal and distal ends, an internal cavity configured for at least partially accommodating the tip, the internal cavity being defined by an internal surface of the distal end wall and by an internal surface of the sidewall, and an optical opening extending through the sidewall, an optical element arranged so that is arranged in an optical path of the intraoral scanner when the sheath is mounted on the tip.

The sheath body is a shell which at least partially enclosed the scanner tip of the intraoral scanner when the sheath is attached. When the sheath is attached, the scanner tip is accommodated in the internal cavity. When the sheath is attached, the optical opening is in the optical path of the scanner. The sheath body thus provides a hygienic barrier between the scanner tip and the mouth of the patient and can be exchanged with another tip for the next patient so that the scanner does not need to be disinfected between patients. The time spent cleaning the scanner between patients is thereby reduced saving time for the dentist or dental technician.

The sheath may comprise a heat conducting element in contact with the optical element, the heat conducting element being configured for contacting a heating element of the intraoral scanner and conducting heat from the heating element to the optical element. The advantage of providing a heat conducting element in the sheath is that heat generated by the scanner may be transferred to the optical element whereby fogging is reduced or avoided. It is further advantageous that the tip does not need its own heating element which would require electrical components in the sheath and an electrical connection to the scanner, which would greatly increase the cost of the sheath and introduce additional points of failure for the sheath.

The sheath body may comprise one or more overhanging protrusions formed integrally with the sheath body, wherein the one or more overhanging protrusions extend over at least part of the heat conducting element, wherein the heat conducting element is retained by the sidewall and/or the distal end wall and the one or more overhanging protrusions. It is advantageous to retain the heat conducting element by arranging it in a recess in the sheath body with the overhanging protrusion(s) forming an opening area of the recess towards the internal cavity, which is smaller than the area of the heat conducting element retained in the recess, as this eliminates the need for other attachment means such as glue removes an assembly step as the sheath body is simply overmolded over the heat conducting element. The resulting sheath is thus more cost-effective and more durable.

The heat conducting element may comprise a first surface facing the distal end wall and/or the sidewall and a second surface facing the internal cavity, wherein the second surface is substantially flush with the internal surface of the distal end wall and/or with the internal surface of the sidewall. At least part of the heat conducting element, e.g. the first and second wing described below, may comprise an exposed surface facing the internal cavity, it is advantageous that the exposed surface is substantially flush with the part of the internal surface of the sheath body that surrounds the exposed surface as thus makes it easier to clean the inside of the sheath making it more hygienic.

A part of the heat conducting element may be sandwiched between the one or more overhanging protrusions and the sidewall and/or end wall. In other words, the first surface of the heat conducting element may abut the internal surface of the sheath body and a part of the second surface of the heat conducting element, e.g. the sloped edges, may abut the overhanging protrusions.

The optical element may be a mirror configured to direct the optical path of the intraoral scanner towards the optical opening. The optical element may be a window arranged in the optical opening configured to allow transmission of light. The optical element may be a mirror and a window.

The heat conducting element may comprise a metal body. The metal body may comprise a first surface configured for facing an internal surface of a distal end wall of the sheath and/or for facing an internal surface of a sidewall of the sheath, a second surface configured for facing an internal cavity of the sheath, wherein the second surface comprise one or more sloped and/or curved edge(s), an optical element contacting portion configured for contacting an optical element of the sheath, a heating element contacting portion configured for contacting a heating element of the intraoral scanner. It is noted that the metal body may be the heat conducting element. The one or more overhanging protrusions may extend over the one or more sloped or curved edge(s). Through such an arrangement, the heat conducting element may be substantially immovably arranged

The sheath body may be overmolded over the heat conducting element. This is advantageous because the manufacturing cost is lowered as the manufacturing process no longer requires a subsequent step of inserting and attaching the heat conducting element into the sheath body.

The optical element contacting portion may have a height, and each of the first and second wings may form a connection portion to the heating element contacting portion, said connection portion extending over 10-50% of the height of the optical element contacting portion. Put in another way, the height of the connection portion measured in the height direction of the optical element contacting portion may be 10-50% of the height of the optical element contacting portion. The height of the connection portion has to take two things into consideration, the heat conductivity from the heating element contacting portion to the optical element contacting portion and the amount of stress on the sheath body caused by thermal expansion when the connection portion is heated, e.g. during autoclaving. The inventors found that a height between 10 and 50% offers a good balance between the two.

Each of the first and second wings may tapper in the height direction of the wings towards the optical element contacting portion. Each of the first and second wings may vary in height, when measured in the height direction of the wings, as they extend away from their respective connection portions towards their free end. By providing wings that have a greater height at the free end opposite the connection portion a greater surface to contact the heating element is provided. Furthermore, by providing some variation in the height of the wings, be it a tapering, a slope, or a curvature along the length direction of the wings, it may be easier to retain the heating element during molding, because the polymer will be able to apply a force in the longitudinal direction against the flow direction, once the polymer has flowed bas the tapering, slope, or curvature.

The optical element contacting portion may comprise one or more abutment protrusions arranged on the second surface of the optical element contacting portion, said one or more abutment protrusions being configured for abutting the optical element when the optical element is attached. During attachment of the optical element, glue will be applied around the one or more abutment protrusion(s) and the optical element will be pushed towards the one or more abutment protrusion(s) whereby the glue will be distributed around the one or more abutment protrusion(s). By pushing the optical element towards the abutment protrusion(s) the angle the optical element forms with the optical axis of the scanner when the sheath is attached to the scanner can also be controlled more precisely. The one or more abutment protrusion(s) thus facilitate attachment and positioning of the optical element. In some embodiments, a thin layer (about 0.2mm) of silicone glue is applied to the optical element contacting portion to get good contact between the heat conductive element and the mirror. The thermal conductivity of the glue matters little due to the thin thickness of the layer. Alternatively, a gap pad, another adhesive, or a thermal interface material may be usedy to minimise the amount of air gaps between the optical element and the optical element contacting portion.

The metal body may be made from aluminium or an aluminium alloy. Aluminium offers a good balance between heat conductivity, price, and durability. The metal body may be formed by metal stamping. Metal stamping provides a cost-effective method for mass producing the heat conducting element.

The sheath body may be made from a material having a thermal conductivity above 3 W/(m·K) at 25 degrees Celsius. This may provide an alternative or addition to the heat conducting element, as the sheath body itself may conduct heat from the heating element to the optical element. The sheath body may be made from a material comprising a polymer, e.g. PSU, and graphite. The amount of graphite in the material may be between 50 and 90% by mass, preferably between 60 and 80/ by mass, more preferably between 65 and 75 % by mass. While most polymers do not offer a thermal conductivity above 3 W/(m·K) at 25 degrees Celsius, examples of some that does are provided further down. The sheath body may be configured for contacting the heating element of the intraoral scanner and conducting heat from the heating element to the optical element. The sheath body may be made from a material having a thermal conductivity above 4 W/(m·K) at 25 degrees Celsius, and which can withstand exposure to steam at a temperature above 120 degrees Celsius at a pressure above 2 bars. Such a sheath body would be able to provide or supplement the heat transfer from the heating element to the optical element and withstand autoclaving.

Disclosed is an intraoral scanner comprising one or more projector unit(s) configured for projecting probe light onto a dental object, one or more camera unit(s) configured for capturing 2D images of the dental object, a scanner body housing the one or more projector unit(s) and the one or more camera unit(s), wherein the scanner body comprises a scanner tip configured for being at least partially inserted into the mouth of a patient, a heating element, and a sheath according to the invention.

Disclosed is a scanner system for obtaining a digital 3D representation of a dental object, the scanner system comprises an intraoral scanner according to the invention, and one or more processor(s) configured for generating the digital 3D representation of the dental object based on the 2D images.

Disclosed is a heat conducting element for a sheath for covering the tip of an intraoral scanner, the heat conducting element comprising a metal body, the metal body comprises a first surface configured for facing an internal surface of a distal end wall of the sheath and/or for facing an internal surface of a sidewall of the sheath, a second surface configured for facing an internal cavity of the sheath, wherein the second surface comprise one or more sloped or curved edges, an optical element contacting portion configured for contacting an optical element of the sheath, a heating element contacting portion configured for contacting a heating element of the intraoral scanner.

The heating element contacting portion may be provided by a first wing and a second wing, the first and second wings extending from the optical element contacting portion. The first wing and the second wing may extend from opposite sides of the optical element contacting portion. The first wing and the second wing may extend along opposite sides of the scanner tip when the sheath comprising the heat conducting element is attached to the scanner. Each of the first and second wings may extend toward a centre longitudinal axis of the metal body in an untensioned state of the metal body. Each of the first and second wings may form an angle below 90 degrees, such as between 85 and 89 degrees, with the centre longitudinal axis of the metal body in an untensioned state of the metal body. This is advantageous as it provides a heat conducting element that will provide an inwards directed force on a core of a mold when the wings are spread over the core, whereby polymer flowing in a primary flow direction substantially parallel with the centre longitudinal axis of the metal body may be prevented from flowing in-between the core and the wings.

The optical element contacting portion may have a height. Each of the first and second wings form a connection portion to the heating element contacting portion, said contacting portion extending over 10-40% of the height of the optical element contacting portion.

Disclosed is a method for manufacturing a sheath for covering the tip of an intraoral scanner, the sheath comprising a sheath body, a heat conducting element, and an optical element, the sheath being configured for covering the tip of an intraoral scanner, the method comprising the steps of arranging the heat conducting element over a core of the mold; inserting the core into a mold matrix to create a mold cavity defined by the core and the matrix, wherein the mold cavity has the shape of the sheath body; injecting a polymer into the mold cavity whereby the sheath body is molded over the heat conducting element; and attaching the optical element to an optical element contacting portion of the heat conducting element. This method not only provides a cost-effective way of manufacturing the sheath, the sheath made by this method may also be more durably and hygienic.

The polymer may be injected from an end of the molding cavity corresponding to the proximal end of the sheath body. The polymer may be injected from the core. The advantage of this is that any protrusions that may be left at the injection point(s) will be located on the internal surface of the sheath body and will thus not come into contact with the mouth of the patient.

The method may comprise the step of applying a force on the heat conducting element in a direction substantially opposite the flow direction of the polymer during the step of injecting the polymer. This is advantageous as it prevents the heat conducting element from being displaced by the flow of the polymer which could result in the heating element being shifted away from the core creating a volume between the core and the heat conducting element for polymer to flow into. This can lead to the heat conducting element being enclosed by the polymer or ending up on the external side of the sheath body after molding which would make for a defective sheath. The method may comprise the step of, during the step of injecting the polymer when the polymer has partially enclosed the heat conducting element above a threshold point, T1, removing the force on the heat conducting element in a direction substantially opposite the flow direction of the polymer. Beyond the threshold point, the polymer which has already partially enclosed the heat conducting element will be sufficient for preventing the flow of the polymer from displacing the heat conducting element in the flow direction, the force applied before may thus be removed, e.g. to free up volume in the mold cavity where the distal end wall may be formed.

The step of attaching the optical element to the optical element contacting portion of the heat conducting element may comprise applying glue to the optical element contacting portion and bringing the optical element into contact with one or more optical element abutment protrusions arranged on the optical element contacting portion.

The step of removing the force on the heat conducting element in a direction substantially opposite the flow direction of the polymer may comprise expanding the volume of the mold cavity.

The polymer is selected from the group consisting of Polysulfone, PSU, Polypropylene (PP), Polyetheretherketone (PEEK), Polycarbonate (PC), Polytetrafluoroethylene (PTFE, Teflon), Polyethylene Terephthalate (PET), Polyetherimide (PEI, Ultem), and High-Density Polyethylene (HDPE), or any combination thereof. While these materials require relatively high temperatures during molding, and thus additional safety measures for the people operating the mold, they are able to withstand repeated autoclaving, making the final sheath suitable for repeated use as it can be cleaned after use and used again on another patient without risking cross-contamination.

The method may comprise the step of regulating the temperature of the mold. The step of regulating the temperature of the mold may be performed using heat exchange between the mold and one or more of the following: heated oil, heated water, an electrical heating element, or any combination thereof. Regulating the temperature of the mold ensures that the mold has a proper temperature on startup and later on after repeated moldings.

The heat conducting element may be made from a material selected from the group consisting of Aluminum, Aluminum alloys, Copper, Brass, Bronze, Magnesium, Iron, Iron alloys, or any combination thereof.

The step of injecting a polymer into the mold cavity may comprise at least partially enclosing two opposing surfaces of the heat conducting element with the polymer. A first surface of the heat conducting element, which faces the matrix, may be substantially fully enclosed by the polymer, and a second surface of the heat conducting element, which faces the core, may be enclosed on a sloped and/or curved edge of the second surface. The first surface will thus face the sheath body, while the second surface, except for the sloped and/or curved edge(s), will be exposed to the internal cavity so that the second surface may contact the optical element at the optical element contacting portion and the heating element at the heating element contacting portion.

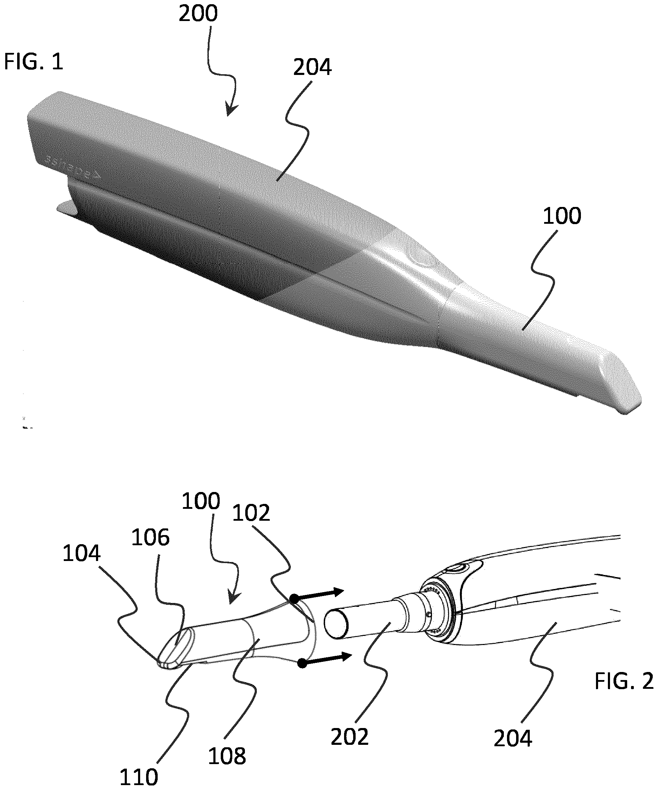

FIG. 1 illustrates an intraoral scanner 200 configured for acquiring image data from inside a patient's mouth. The intraoral scanner 200 comprises a scanner body 204 housing electronic components, said scanner body 204 being configured for being held in a user's hand during operation of the scanner 200. The intraoral scanner 200 further comprises a tip 202 configured for being at least partially inserted into the patient's mouth. The tip 202 comprises a scanner window, through which the scanner 202 may project probe light into the oral cavity by means of one or more light sources, and through which the scanner 200 may acquire image data of the oral cavity by means of at least one image sensor arranged in the intraoral scanner 200. For hygienic purposes, the intraoral scanner 200 is configured for having a sheath 100 attached to the tip 202 in order to prevent the tip 202 from being contaminated during scanning sessions when the tip 202 is inserted into the patient's mouth. The sheath 100 may be releasably attached, e.g. by a click attachment, magnets, press fit, dedicated release button, or bayonet attachment, to the tip 202 so that it can easily be replaced by another sheath 100 between patients.

FIG. 2 shows the attachment of a sheath 100 to the tip 202 of an intraoral scanner 200. The sheath 100 comprises a sheath body having a proximal end 202 having a proximal end opening through which the tip 202 is inserted. The sheath body also comprises a distal end 104 having a distal end wall 106 and a sidewall 108 extending between the distal end wall 106 and the proximal end 102. The sidewall 108 may have a shape which is substantially cylindrical or that of a truncated cone so that an internal cavity is defined by the sidewall 108 and the distal end wall 106, said internal cavity being configured for at least partially accommodating the tip 202 when the sheath 100 is attached to the scanner 200. To allow the scanner 200 to project light and acquire imaged, the sheath body comprises an optical opening 110 arranged in the sidewall 108 and extending through the side wall 108. The sheath body is preferably made from a polymer so that it can be molded and manufactured at low cost. It is noted that the term optical opening does not imply that a fluid connection is provided, but rather that light of one or more wavelengths are allowed to pass through. A sheath window may be arranged in the optical opening, whereby contaminants are prevented from entering through the optical opening while also allowing light to pass through. The sheath window may be the optical element or it may form part of the optical element, e.g. together with the mirror described below.

The polymer used for the sheath body should preferably be a high-performance thermoplastic such as polysulfone, PSU, which can withstand relatively high temperatures, so that the sheath can undergo autoclaving for cleaning the sheath between patients. Other polymer materials that may be used are Polypropylene (PP), Polyetheretherketone (PEEK), Polycarbonate (PC), Polytetrafluoroethylene (PTFE, Teflon), Polyethylene Terephthalate (PET), Polyetherimide (PEI, Ultem), High-Density Polyethylene (HDPE), PPSU, PA (heat resistant types), LCP, PPS, IXEF, as well as glass filled and or mineral filled grades of all of the listed polymers.

The sheath 100 may comprise one or more optical elements 112 arranged so that they are located in an optical path of the scanner 200. The optical elements 112 may comprise a mirror configured for redirecting the optical path from the scanner window towards the optical opening 110. The optical elements 112 may comprise a sheath window arranged in the optical opening 110 to provide a transparent seal between the interior cavity and the outside of the sheath 100. The optical element(s) 112 may comprise one or more lenses configured for shaping probe light emitted from the scanner 200 and/or light reflected of a dental object entering the scanner 200.

A common issue for intraoral scanners is that optical elements may be dewed as the scanner is inserted into the warm, humid environment of the mouth, which may affect the quality of the scan data that can be obtained. To mitigate this, the sheath 100 comprises a heat conducting element 300 arranged in the internal cavity in contact with the optical element 112. The heat conducting element 300 is further configured for contacting a heating element 206 of the scanner 200 when the sheath 100 is attached to the scanner 200, the heating element 206 being configured for generating heat. During operation of the scanner 200, the heating element will generate heat from the electrical power supply of the scanner 200, which will be at least partially transferred to the optical element 112 via the heat conducting element 300, whereby the optical element 112 will be heated. The optical element 112 may be heated to at least 32 degrees Celsius during operation of the scanner 200, or to at least 37 degrees Celsius so that it matches the temperature of the patient's mouth, whereby fogging of the optical element 112 is reduced or even prevented. For embodiments where the optical element 112 is arranged inside the internal cavity, the optical element 112 may be heated to even higher temperatures, e.g. up to 51 degrees Celsius, during operation of the scanner 200 which will further prevent fogging without risking contact with the patient's mouth. The scanner 200 may comprise a temperature sensor configured for detecting the temperature of the heat conducting element 300 and/or of the optical element 112, and a control device configured for controlling the heat output of the heating element 206 based on detections of the temperature sensor. The control device may be configured for reducing or turning off the heating element 206 if detections of the temperature sensor indicates that the temperature of the heat conducting element 300 and/or the optical element 112 are above a safety threshold.

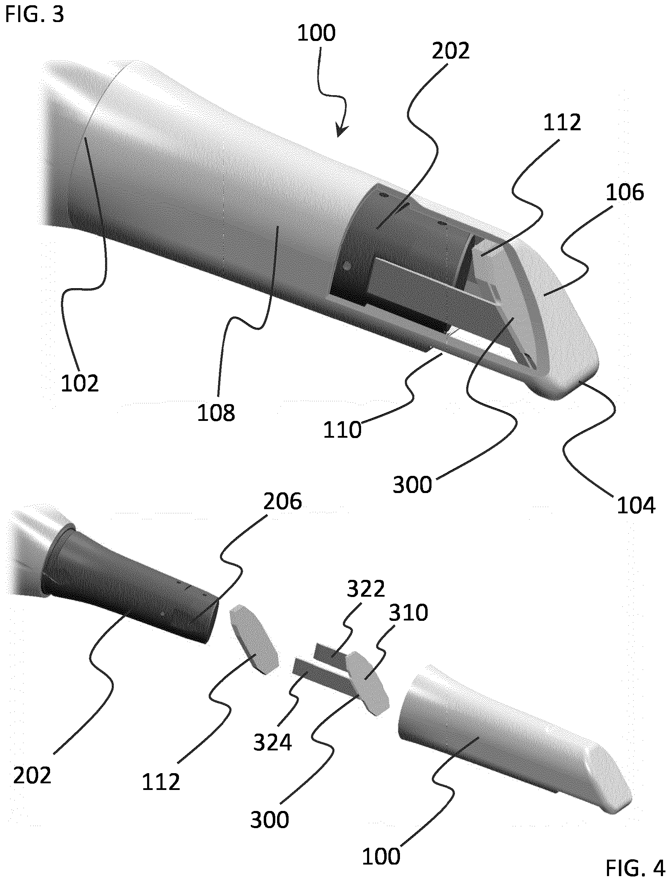

FIG. 3 shows a perspective view with a cut away section of a sheath 100 of the invention and FIG. 4 shows an exploded view of the same sheath 100. In the embodiment of FIG. 3 and 4, the optical element 112 is a mirror arranged inside the internal cavity at the distal end wall 106, the mirror being configured for redirecting the optical path of the scanner 200 from a direction substantially parallel with the longitudinal axis of the scanner 200 to a direction substantially perpendicular with the longitudinal axis of the scanner 200. The heat conducting element 300 is provided by a metal body comprising a planar optical element contacting portion 310 arranged between the distal end wall 106 and the optical element 112 in contact with the optical element 112. To contact the heating element 206 of the scanner 200 the metal body comprises a heating element contacting portion 320 which in the shown embodiment is provided by a first wing 322 and a second wing 324 extending from the optical element contacting portion 310 towards the proximal end 102. The heat conducting element 300 and its arrangement and attachment in the sheath 100 will be further described below.

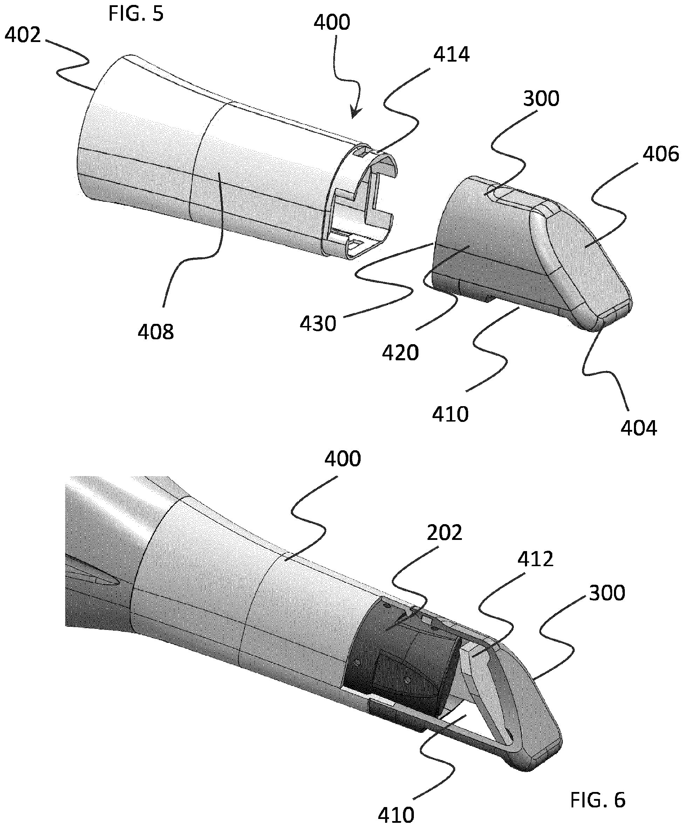

FIG. 5 shows a perspective disassembled view of a sheath 400 of the invention and FIG. 6 shows an exploded view of the same sheath 400. In this embodiment, the heating element 300 is provided as a metal cap forming part of the sheath body. The sheath body comprises a polymer part having a proximal end 402 having a proximal end opening configured for receiving the top 202, a distal end having a distal end opening, and a circumferential sidewall 408 extending between proximal end 402 and the distal end. The sheath body further comprises the heat conducting element 300 which has a proximal end with an opening 430 configured for attachment with the distal end opening of the polymer part, and a distal end 404 having a distal end wall 406. The heat conducting element 300 further comprises a second circumferential sidewall 420 which when the heat conducting element 300 is assembled with the polymer part forms a continuous sidewall with the sidewall 408 of the polymer part. When assembled, the sidewalls of the polymer part and the heat conducting element 300 and the distal end wall 406 of the heat conducting element 300 thus define the internal cavity. To assemble the polymer part and the heating element 300, the two may comprise mutually corresponding attachment means 414 such as a click fit or a bayonet mount. The mutually corresponding attachment means 414 may be supplemented by also applying glue or adhesive, e.g. a silicone glue, to seal the interface between the polymer part and metal cap.

Similar to the embodiment of FIG. 3 and 4, the optical element 412 is provided by a mirror arranged at the distal end wall 406 in contact with the heat conducting element 300. When the sheath 400 is attached to the scanner 200, the second sidewall 420, i.e. the sidewall of the metal cap/heat conducting element 300, will be in contact with the heating element 206 whereby heat from the heating element 206 may be transferred to the optical element 412 via the heat conducting element 300. It is noted that in this embodiment, the optical opening 410 is provided by an opening in the second sidewall 420.

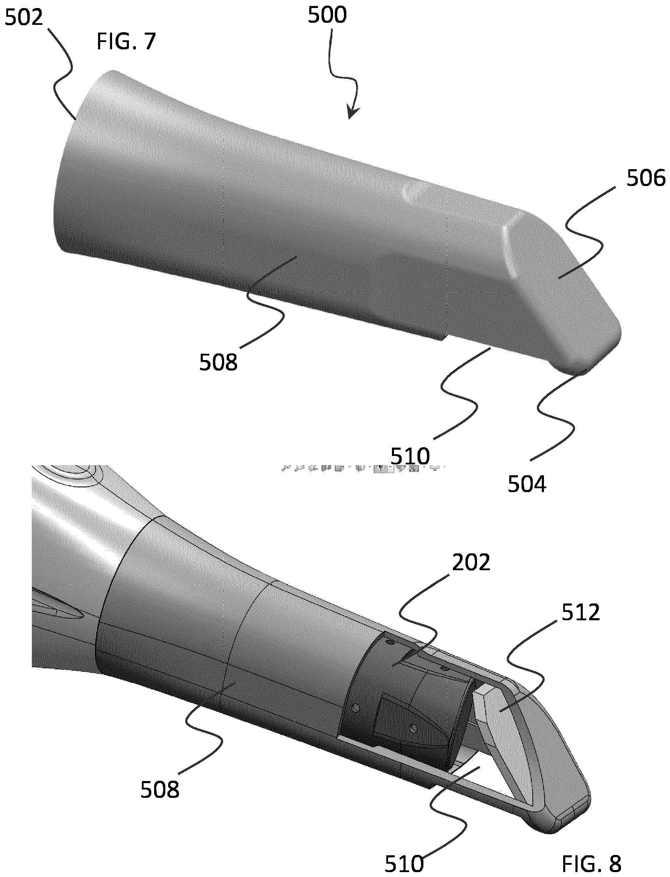

FIG. 7 shows a perspective view of a sheath 500 of the invention and FIG. 8 shows a perspective disassembled view of the same sheath 500. In the shown embodiment, the sheath body is similar to that of the sheath 100 shown in FIG. 3 and 4 except it is made from metal, e.g. aluminum. The shown embodiment also comprises an optical element 512 in the form of a mirror arranged at the distal end wall 506 in contact with the metal sheath body. When the sheath 500 is attached to the tip 202, the sheath body contacts the heating element 206 whereby heat may be transferred from the heating element 206 to the optical element 512 via the metal sheath body. The sheath body itself thus provide the heat conducting element by virtue of the heat conducting ability of the metal the sheath body is made of.

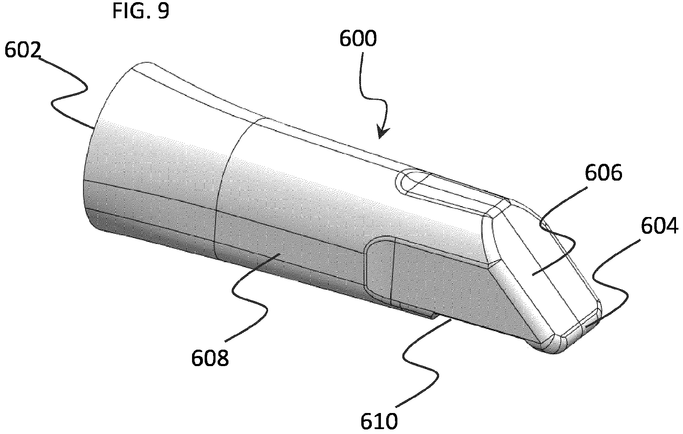

FIG. 9 shows a perspective view of a sheath 600 of the invention. In the shown embodiment, the sheath body is similar to that of the sheath 100 shown in FIG. 3 and 4 except it is made from material comprising a polymer, e.g. polysulfone, PSU, mixed with graphite, which increases the thermal conductivity of the material. The material preferably comprises between 60 and 80 percent by mass/weight, also denoted wt%, of graphite. Additional or alternative additive may be used in the material provided that the material preferably achieves a thermal conductivity of at least $3 \frac{W}{m \cdot K}$ at 25 degrees Celsius, more preferably above $4 \frac{W}{m \cdot K}$ at 25 degrees Celsius. The shown embodiment also comprises an optical element 612 in the form of a mirror arranged at the distal end wall 606 in contact with the metal sheath body. When the sheath 600 is attached to the tip 202, the sheath body contacts the heating element 206 whereby heat may be transferred from the heating element 206 to the optical element 612 via the sheath body. The sheath body itself thus provide the heat conducting element 300 by virtue of the heat conducting ability of the polymer and graphite material the sheath body is made of.

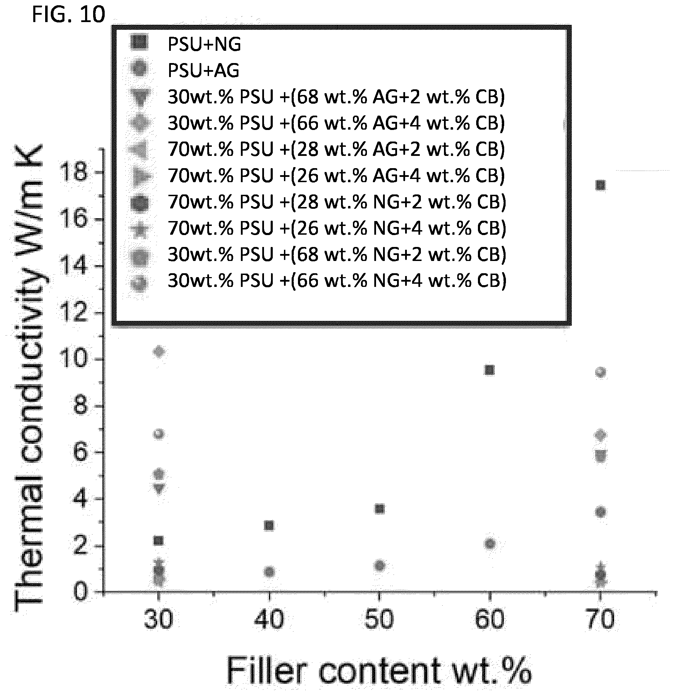

FIG. 10 shows a graph with the thermal conductivity of various composite materials of PSU with filling degrees ranging from 30 to 70% by weight measured at 25 degrees Celsius. The abbreviations of the legend are as follows carbon black (CB), natural graphites (NG), and artificial graphites (AG).

As can be seen from the graph, several of the composite mixtures achieve a thermal conductivity of at least $3 \frac{W}{m \cdot K}$ at 25 degrees Celsius, or even better above $4 \frac{W}{m \cdot K}$ at 25 degrees Celsius.

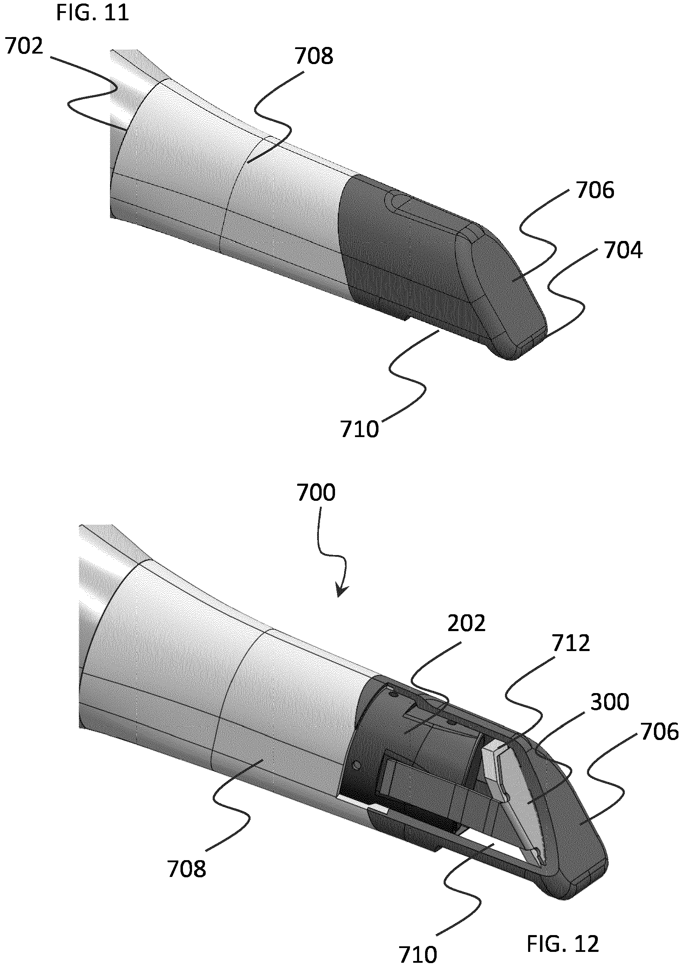

FIG. 11 shows a perspective disassembled view of a sheath 700 of the invention and FIG. 12 shows a cut away view of the same sheath 700. This embodiment combines elements of the embodiment of FIG. 3 and 4 with elements of the embodiment of FIG. 5 and 6. In the shown embodiment, the sheath body is made from a proximal part comprising the proximal opening 702 and a distal part comprising the distal end wall 706. The proximal and distal parts may be made from different materials indicated by the color difference in the figures, or they may be made from the same type of polymer. This embodiment may be molded by first overmolding the distal part over the heat conducting element 300, and secondly overmolding the proximal part over the distal part. Similar to the embodiment of FIG. 3 and 4, the optical element 712 is provided by a mirror arranged at the distal end wall 706 in contact with the distal part.

It is noted that the embodiments of FIG. 7 and 8 and FIG. 9 may also be combined with the metal body heat conducting element 300 of FIG. 3 and 4, or with the metal body heat conducting element 300 of the following embodiments.

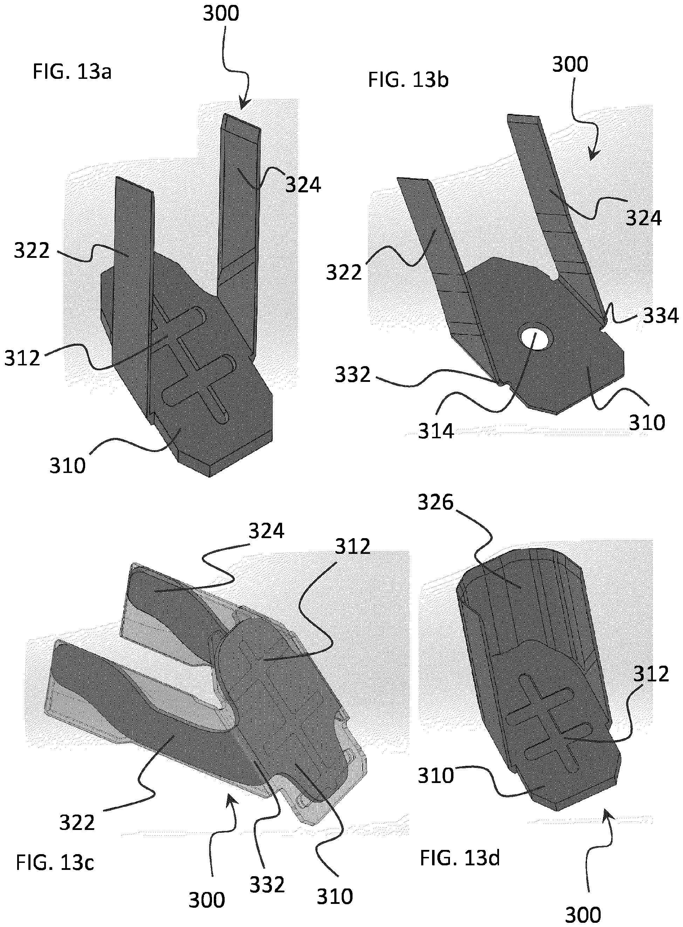

FIG. 13a-d show various embodiments of a heating element 300 similar to that used in FIG. 3 and 4. The heat conducting element 300 comprises a metal body. The metal body is made of a metal having a thermal conductivity of at least $80 \frac{W}{m \cdot K}$ at 25 degrees Celsius. The metal body comprises a first surface which faces the internal surface of the distal end wall of the sheath 100 and/or an internal surface of the sidewall 108 of the sheath 100. The metal body comprises a second surface which faces the internal cavity of the sheath 100. The metal body comprises an optical element contacting portion 310 which contacts the optical element 112 of the sheath 100. The metal body comprises a heating element contacting portion configured for contacting the heating element 206 of the intraoral scanner 200 when the sheath 100 is attached to the scanner 200.

The embodiments of the heat conducting element 300 shown in FIG. 13a-d are all configured for transferring heat to an optical element 112 that is a mirror, although it may also be used to heat a sheath window or both a mirror and a sheath window. Because the mirror will be arranged in contact with the optical element contacting portion 310 in the assembled sheath 100, the optical element contacting portion 310 is angled with respect to the centre longitudinal axis, L, when seen from the side. The angle formed between the optical element contacting portion 310 and the centre longitudinal axis, L, is preferable between 30 and 60 degrees, more preferable between 40 and 50 degrees. It is noted that the centre longitudinal axis, L, of the heat conducting element 300, is parallel with the longitudinal axis of the scanner 200 so the angle of the optical element contacting portion 310 will also define the angle between the mirror and the longitudinal axis of the scanner 200 when the sheath 100 is attached to the scanner 200.

In FIG. 13a-c, the heating element contacting portion is provided by a first wing 322 extending from a first side of the optical element contacting portion 310, and by a second wing 322 extending from a second side of the optical element contacting portion 310. When the sheath 100 is attached to the scanner 100, the first and second wings 322, 324 will extend alongside opposing sides of the tip 202 and contact the heating element 206. The first wing 322 extends from a first connection portion 332 connecting the first wing 322 to the optical element contacting portion 310 and the second wing 324 extends from a second connection portion 334 connecting the second wing 324 to the optical element contacting portion 310. The sheath body is preferably dimensioned so the distance between the wings 322, 324 is marginally smaller than the tip 202 so that material tension of the sheath body provides a press fit when the sheath is arranged over the tip 202, whereby improved contact between the wings 322, 324 and the heating element 206 is provided.

In FIG. 13a and 13b the first connection portion 332 connects the first wing 322 to the optical element contacting portion 310 at the centre of the height, $H_1$, of the optical element contacting portion 310, i.e. the centre of the height, $H_2$, of the connection portion 332 is below the centre of the height, H1, of the optical element contacting portion 310, whereby the first wing 322 will be at the level of the heating element 206 when the sheath 100 is arranged on the scanner 200. Similarly, the second connection portion 334 connects the second wing 324 to the optical element contacting portion 310 at the centre of the height, $H_1$, of the optical element contacting portion 310 whereby the second wing 324 will be at the level of the heating element 206 when the sheath 100 is arranged on the scanner 200. By connecting the first and second wings 322, 324 at the same level as the heating element 206 the wings 322, 324 may extend from the optical element contacting portion 310 in a straight direction in the heigh direction of the wings, $H_b$, making them simpler to manufacture.

The embodiment shown in FIG. 13c differs in the first connection portion 332 connects the first wing 322 to the optical element contacting portion 310 below the centre of the height, $H_1$, of the optical element contacting portion 310, i.e. the centre of the height, $H_2$, of the connection portion 332 is below the centre of the height, $H_1$, of the optical element contacting portion 310, whereby the first wing 322 will not be at the level of the heating element 206 when the sheath 100 is arranged on the scanner 200. Similarly, the second connection portion 334 connects the second wing 324 to the optical element contacting portion 310 below the centre of the height, $H_1$, of the optical element contacting portion 310, i.e. the centre of the height, $H_2$, of the connection portion 334 is below the centre of the height, $H_1$, of the optical element contacting portion 310, whereby the second wing 324 will not be at the level of the heating element 206 when the sheath 100 is arranged on the scanner 200. The wings 322, 324 of this embodiment are also less flexible than other embodiments which may reduce tensile stress in the sheath body.

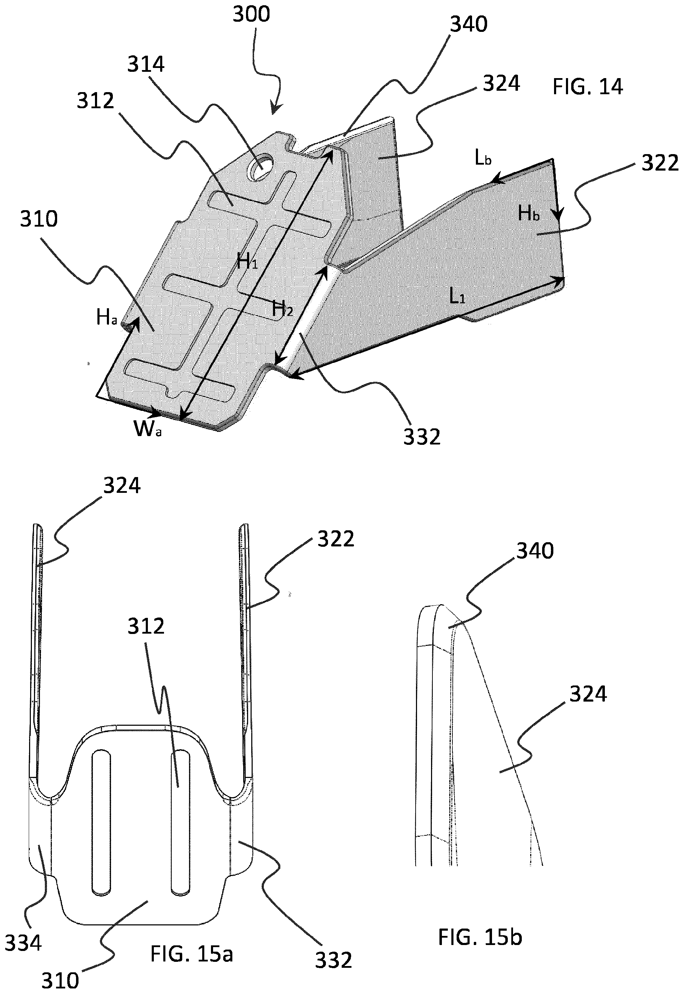

To allow the first and second wings 322, 324 to contact the heating element 206, each of the first and second wings 322, 324 either slopes upwards in the heigh direction of the wings, $H_b$, as they extend away from the optical element contacting portion 310 as seen in FIG. 13c, or each of the first and second wings 322, 324 flares out in the heigh direction of the wings, $H_b$, as the wings extend away from the optical element contacting portion 310, e.g. as seen in FIG. 14. While this adds a more complex structure to each of the wings 322, 324, it means that the first and second connection portions 332, 334 will be arranged closer to the optical window then to the top of the sheath body which means that the stress caused by thermal expansion is less damaging to the sheath body. This is particularly relevant during autoclaving, i.e. disinfection or sterilization, where the sheath 100 is subjected to temperatures above 100 degrees Celsius, at which temperatures stress cracks may form in the sheath body because the metal of the heat conducting element 300 expands more rapidly than the polymer of the sheath body when heated. Repeated autoclaving may cause the sheath body to become more brittle further adding to the risk of stress cracks forming. Arranging the first and second connection portions 332, 334 closer to the optical window than to the closed top side of the sheath body means that this stress will be isolated to a portion of the sheath body that is better at withstanding it.

To further reduce the stress on the sheath body, it may be advantageous to keep the height, $H_2$, of the first and second connection portions 332, 334 as short as possible without compromising the structural integrity of the metal body and the heat conducting from the first and second wings 322, 324 to the optical element contacting portion 310. The inventors have found the a ratio between the height, $H_2$, of the first and second connection portions 332, 334 to the height, $H_1$, of the optical element contacting portion 310, is advantageously between 1:4 and 2:3, preferably between 1:3 and 1:2, which gives a favorable compromise between structural integrity and heat conducting capability and the amount of stress on the sheath body caused by thermal expansion of the metal body. The height, $H_2$, should be tall enough so as to not create a heat conductivity bottle neck but small enough so as to avoid stress cracks after autoclaving, but still large enough that enough heat could be conducted

To facilitate arrangement and attachment of the mirror, i.e. the optical element 112, the embodiments of FIG. 13a, 13c, and 13d comprises one or more optical element abutment protrusions 312 on the interior surface of the optical element contacting portion 310, which helps the assembler during attachment of the mirror by providing a control of the glue used for attaching the mirror to the optical element contacting portion 310 and an abutment surface which the mirror is pressed against during gluing. Finally, the optical element abutment protrusion(s) 312 ensure contact between the metal body and the optical element as the glue is limited to the space below the optical element abutment protrusions 312. The optical element abutment protrusions 312 may be provided by punching/stamping which means that the exterior surface of the optical element contacting portion 310 may have the 'negative' impression in the form of a recess in the exterior surface of the optical element contacting portion 310. Alternatively, the optical element contacting portion 310 could comprise one or more depression(s) in which glue can be injected.

The embodiment of the heat conducting element 300 shown in FIG. 13b comprises means for attachment during molding provided by a hole 314 in the optical element contacting portion 310. The means for attachment during molding are configured for fixating the heat conducting element 300 as the sheath body is molded over the heat conducting element 300. The means for attachment during molding are configured for cooperation with a corresponding fixture part of the mold which when engaged with the means for attachment during molding prevents the heat conducting element 300 from moving as the fluid polymer flows of the heat conducting element 300 and in doing so applies a force on the heat conducting element 300 which could shift the position of the heat conducting or cause the wings 322, 324 to lift causing plastic to end up on the wrong side of the heat conducting element 300 if not counteracted. Alternatively or additionally, the hole 314 may be used for attachment during anodization surface treatment.

The embodiment of the heat conducting element 300 shown in FIG. 13d comprises an alternative solution for providing the heating element contacting portion. Rather than having the first and second wings 322, 324, this embodiment comprises a single flange 326 extending from the optical element contacting portion 310 in the direction of the centre longitudinal axis, L. When seen along the centre longitudinal axis, L, the single flange 326 has an arch-shaped cross-section which when the sheath 100 is attached to the scanner 200 covers at least 180 digress of the circumference of the tip 202. Although this makes for a more complex structure then the previous embodiments, it also greatly increases the contact surface and heat conduction ability of the heating element contacting portion.

FIG. 14 shows an embodiment of the heat conducting element 300 comprising both the means for attachment during molding 314 and the optical element abutment protrusion(s) 312. Furthermore, FIG. 14 illustrates the various directions used in the description above and below. It is noted that the height direction, $H_a$, of the optical element contacting portion 310 is defined from the plane in which the optical element contacting portion 310 lies, which as previously described may be angled with respect to the centre longitudinal axis, L. This means that the height direction, $H_a$, of the optical element contacting portion 310 may not be orthogonal with the height direction, $H_b$, of the first and second wings 322, 324. Similarly, the height, $H_2$, of the first and second connection portions 332, 334 are also defined in the coordinate system of the optical element contacting portion 310.

FIG. 15a and 15b show a presently preferred embodiment of the heat conducting element 300. The shown heat conducting element 300 is similar those previously described in the heating element contacting portion is provided by the first and second wings 322, 324. The heating element 300 also comprises two optical element abutment protrusions 312, each of which extend in the height direction, $H_a$, of the optical element contacting portion 310 on the interior surface of the optical element contacting portion 310.

FIG. 15a and 15b further show the first surface, also referred to as the exterior surface, configured for facing the internal surface of a distal end wall of the sheath and/or for facing an internal surface of a sidewall of the sheath. To put it simply, the first surface faces outwards towards the sheath body. Opposite the first surface, the metal body comprises a second surface, also referred to as the interior surface, configured for facing an internal cavity of the sheath body. On the second surface, at least part of the edge 340 is curved and/or sloped. The advantage of proving the sloped and/or curved edge 340 is that as the sheath body is being molded over the heat conducting element 300, the space formed between the edge 340 and the core 810 of the mold 800 will be filled with the fluid polymer. When this solidifies, the result will be an overhanging protrusion 120 extending over the curved edge 340, wherein the overhanging protrusion 120 will maintain the heat conducting element 300 fixed against the exterior of the sheath body. The sloped and/or curved edge(s) 340 preferably provides at least 50% of the combined edge length of the second surface of each of the first and second wings 322, 324, whereby the resulting combined length of the one or more overhanging protrusion(s) 120 will efficiently retain the heat conducting element 300 when the sheath body is molded over the heat conducting element 300. Furthermore, the overhanging protrusion(s) may make it more difficult for dirt or pathogens to creep in between the sheath body and the wings making the shown solution a more hygienic way of anchoring the heat conducting element.

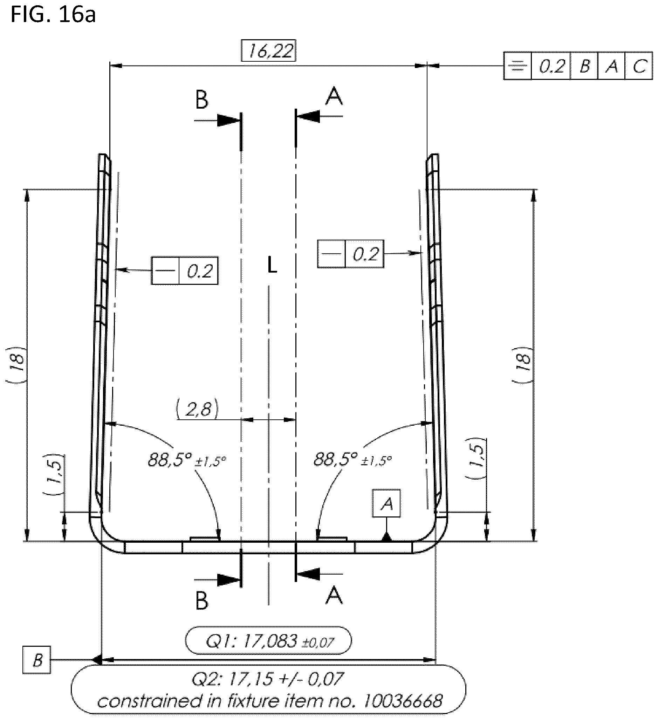

FIG. 16a-e are technical drawings of the embodiment of the heat conducting element 300 shown in FIG. 15a and 15b. The measurements provided in the drawings are given in mm. In FIG. 16a it can be seen that each of the first and second wings 322, 324 extend toward a centre longitudinal axis, L, of the metal body in an untensioned state of the metal body, i.e. when the wings are not subjected to a force in the transverse/width direction. The angle formed between the first wing 322 and the plane of the optical element contacting portion 310, i.e. the plane defined by the optical element contacting portion 310, is 88.5 degrees. Similarly, the angle formed between the second wing 324 and the plane of the optical element contacting portion 310 is also 88.5 degrees. The advantage of having the wings bend inward, i.e. towards the centre longitudinal axis, L, is that when the heat conducting element 300 is arranged over the core 810 of the mold 800 in the initial step of the molding process described in detail below, the wings 322, 324 will be forced outward by the core 810 into a position where the wings 322, 324 are substantially parallel. In this position, each wing 322, 324 will apply a force against the core 810 due to the tension. Because of this force, the fluid polymer being injected into the mold cavity 840 will not creep in between the wings 322, 324 and the core 810 which ensures the second surface of the heat conducting element 300, with the exception of the clopped and/or curved edge(s) 340, remains exposed to the internal cavity of the sheath body so that this exposed portion can be contacted by the heating element 206.

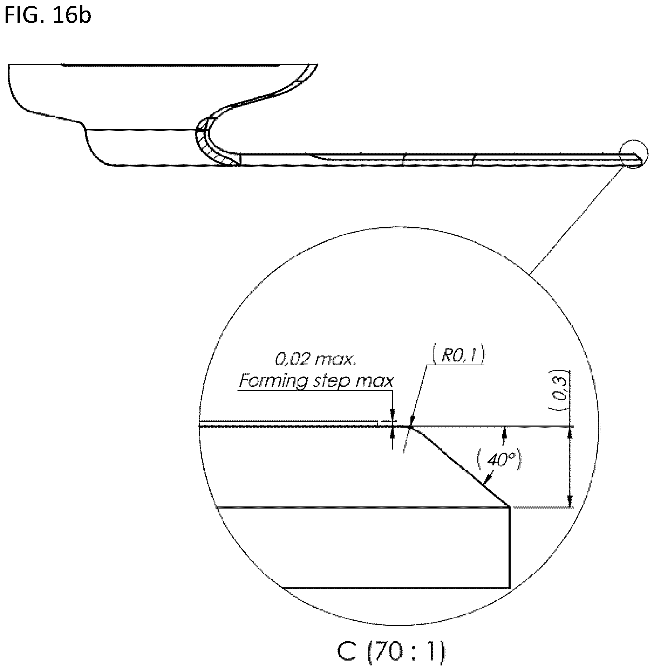

FIG. 16b shows the first wing 322 of the heat conducting element 300 with the sloped edge 340 shown in the zoom-in window. It is noted that the features shown herein may also apply to the second wing 324. The sloped edge 340 preferably forms an angle between 25 and 55 degrees with the second surface, more preferably between 35 and 45 degrees, such as 40 degrees as shown in the zoom-in window. Furthermore, the sloped edge 340 preferably has a depth between 1/8 and 1/2 of the thickness of the wing 322, i.e. the distance between the first and second surfaces of the wing 322. The depth of the sloped edge 340 is preferably between 0,2 and 0,5 mm measured in a direct line, i.e. orthogonal to both planes, from the plane defined by the beginning of the slope to the plane defined by the end of the slope as showed in the zoom-in.

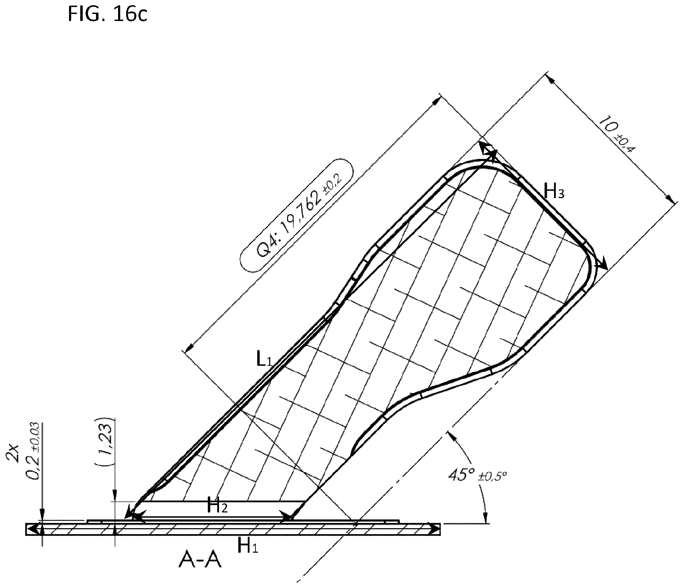

FIG. 16c shows a cross-sectional view along line A-A shown in FIG. 16a, in which the first wing 322 can be seen. It is noted that the features shown herein may also apply to the second wing 324. The optical element contacting portion 310 is substantially planar and extends in a first plane. The first wing 322 is also substantially planar and extends in a second plane. As described above, the first and second planes form an angle below 90 degrees and preferably above 85 degrees, such as 88,5 degrees, when view along the height direction, $H_a$, of the optical element contacting portion 310. When viewed along the width direction, $W_a$, of the optical element contacting portion 310, the length direction, $L_b$, of the first wing 322 form an angle between 30 and 60 degrees, preferably between 35 and 50 degrees, such as about 40 degrees, with the first plane. When viewed along the width direction, $W_a$, of the optical element contacting portion 310, the first wing 322 has a shape which flares outwards, i.e. the height, $H_3$, of the first wing 322 at its end is greater than a height of the first wing 322 measured at the first connection portion 332.

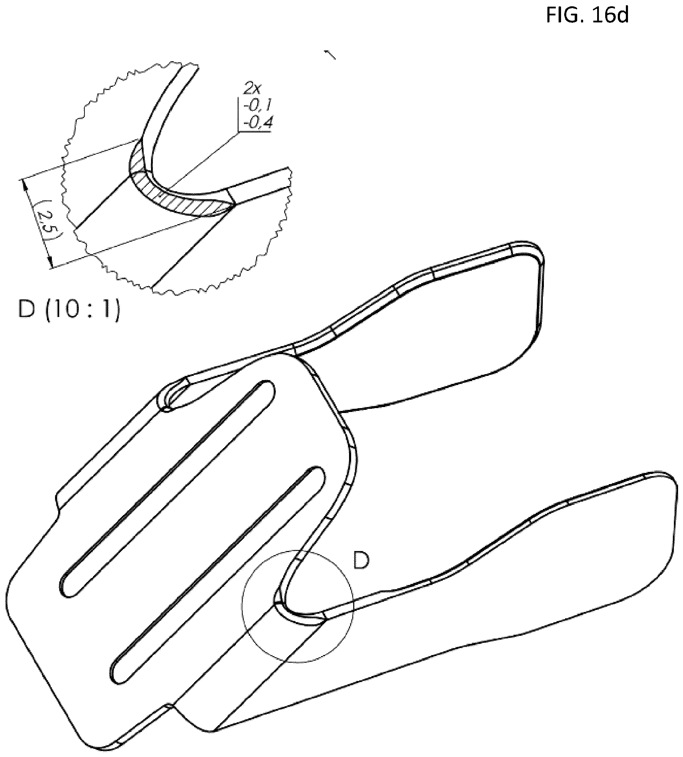

FIG. 16d shows a perspective view of the heat conducting element 300 and a zoom-in of the first connection portion 332. It is noted that the features shown herein may also apply to the second connection portion 334. As can be seen the first connection portion 334 is curved so that the above-mentioned angle between the first wing 322 and the centre longitudinal axis, L, is formed.

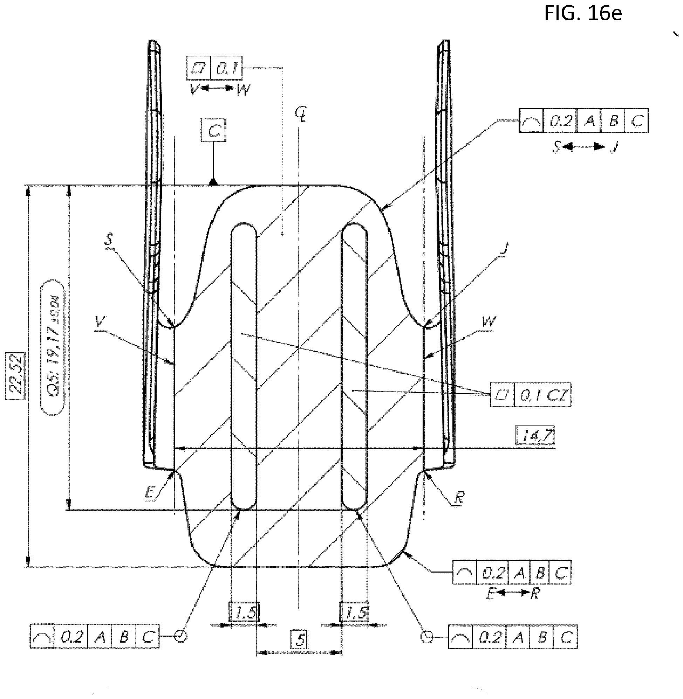

FIG. 16e shows the heat conducting element 300 viewed perpendicular to the first plane, i.e. perpendicular to the optical element contacting portion 310.

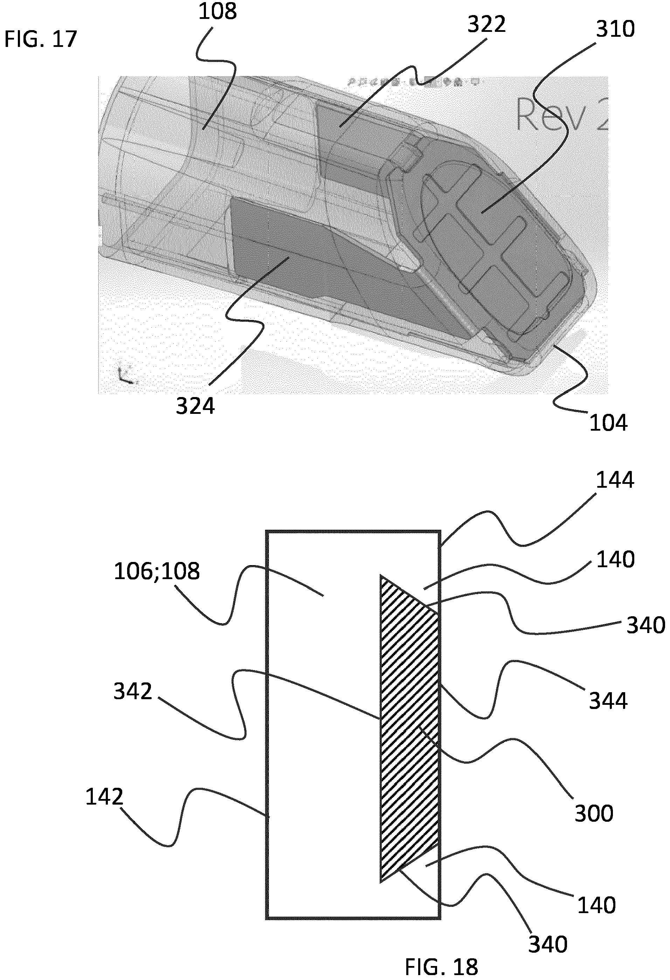

FIG. 17 shows the structure of the sheath 100 after the sheath body has been molded over the heat conducting element 300. At the distal end 104, the optical element contacting portion 310 abuts the distal end wall 106 which is molded in the volume of the mold cavity 840 between the first surface of the metal body, more precisely the first surface of the optical element contacting portion 310, and the matrix of the mold 800. Because the sheath body is molded over the heat conducting element 300, the first and second wings 322, 324 are embedded into the sidewall 108 and are positioned into cavities formed in the sidewall 108 as the fluid polymer flowed over the first surface, i.e. the exterior surface, of the wings 322, 324 and into the volume formed by the sloped edge 340 and the core 810 of the mold 800. The cavities resulting from this process thus has a greater area at their base than at their opening towards the internal cavity of the sheath body because the overhanging protrusions limit the opening area.

FIG. 18 shows a schematic cross-sectional view of the sheath body and the heat conducting element 300 at the sidewall 108 or distal end wall 106. The sheath body comprises an an internal surface 144 facing the internal cavity and an external surface 142 facing the outside of the sheath 100. Similarly, the heat conducting element 300 comprises a first surface 342 facing the sidewall 108 or distal end wall 106 and an opposing second surface 344 facing the internal cavity. At the internal surface 144, a cavity for fixating the heat conducting element 300 is formed due to the sheath body being molded over the heat conducting element 300. The cavity for fixating the heat conducting element 300 comprises the one or more overhanging protrusions 140 formed integrally with the sheath body, where the sides of the overhanging protrusions 140 that face inwards towards the cavity for fixating the heat conducting element 300 are sloped to correspond to the sloped edge 340 of the heat conducting element 300.

As can be seen, the second surface 344 of the metal body of the heat conducting element 300 is substantially flush with the internal surface 144 of the sidewall 108 or distal end wall 106. This is advantageous from a hygienic perspective as the almost seamless interface between the second surface 344 and the internal surface 144 provides very few options for pathogens and/or dirt to accumulate and makes it easier to clean the inside of the sheath 100. The disclosed sheath 100 thus also provides a hygienic benefit.

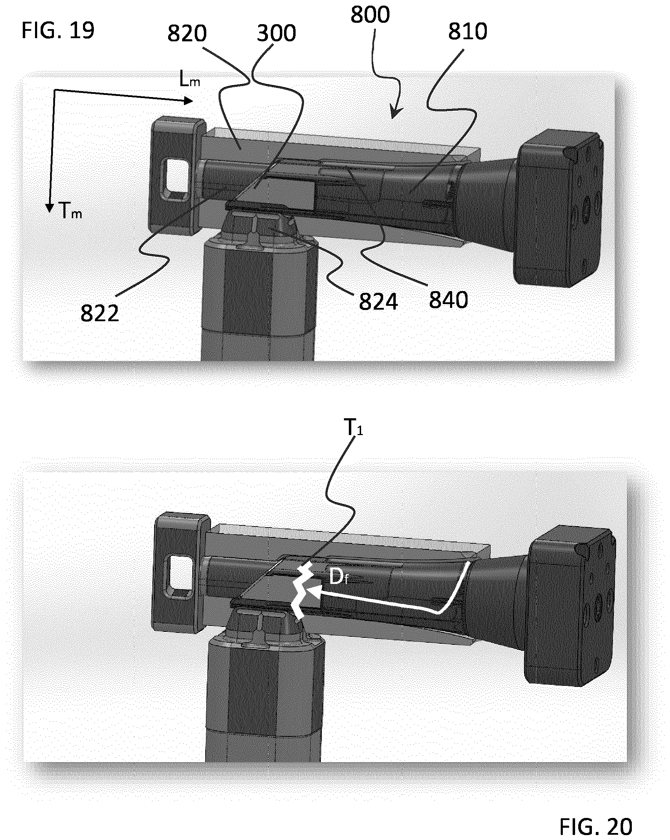

FIG. 19-23 show various step of a molding process of the sheath 100 of the invention. The mold 800 comprises a core 810 around which the sheath body is molded and which defines the internal cavity. The mold 800 comprises a matrix 820, sometimes referred to as the fixed part of a mold, which during molding surrounds the core 810 whereby the matrix 820 and the core 810 form an enclosed space which is the mold cavity 840. Before the core 810 is inserted into the matrix 820 a heat conducting element 300 as described above is arranged over the core 810 at a position of the mold cavity 840 which corresponds to the distal end 104 of the sheath body. The heat conducting element 300 is arranged so that the second surface of the optical element contacting portion 310 and the second surface of the heating element contacting portion, e.g. the wings 322, 324, are in contact with the core 810 so that the fluid polymer cannot flow between the core 810 and the heat conducting element, except at the sloped edges 340. After the polymer has flowed past a certain area of the wings 322, 324, the pressure the fluid polymer applies on the outside of the wings 322, 324 will also push the wings 322, 324 towards the core further preventing polymer from getting between the core 810 and the wings 322, 324. The heat conducting element 300 thereby constitutes part of the core 810 in that it will define part of the shape of the internal cavity of the sheath body.

To retain the heat conducting element 300 as the fluid polymer flows through the mold cavity 840, the matrix 820 may comprise a longitudinally displaceable part 822 which in the initial steps of the molding process is brought into contact with the first surface of the optical element contacting portion 310 whereby the heat conducting element 300 is prevented from shifting in the longitudinal direction of the mold, $L_m$, i.e. it maintains contact with the core 810. Alternatively or additionally, the means for attachment during molding 314 may be used if the heat conducting element 300 comprise those. As the fluid polymer flows over the heat conducting element 300 it may force the on it, it is therefore advantageous to apply a force on the heat conducting element 300 in a direction substantially opposite the flow direction of the polymer.

To form the optical opening 110 the matrix 820 may comprise a transversely displaceable part 824 which in the initial steps of the molding process is brought into contact with the core 810. The transversely displaceable part 824 is displaceable in the transverse direction of the mold, $T_m$, so that it may be retracted away from the core 810 and clear of the optical opening 110 once the sheath body has solidified.

FIG. 20 shows how the fluid polymer is injected into the mold cavity 840 after the heat conducting element 300 has been arranged on the core 810 and the two 300, 810 have been inserted into the matrix 820. As is shown, the polymer is injected from an end of the molding cavity corresponding to the proximal end 102 of the sheath body meaning that the primary flow direction, $D_f$, is in the longitudinal direction of the mold, $L_m$. The polymer is preferably injected from the core 810 or another portion of the mold 800 corresponding to the internal cavity of the sheath body. This is advantageous as the injection point of the polymer may leave small projections or other irregularities, known as injection mold gate break off remains, in the sheath body, and if the polymer is injected from the inside of the sheath body, they will appear on the internal surface 144 where they are less likely to accumulate pathogens or come into contact with the patient's mouth.

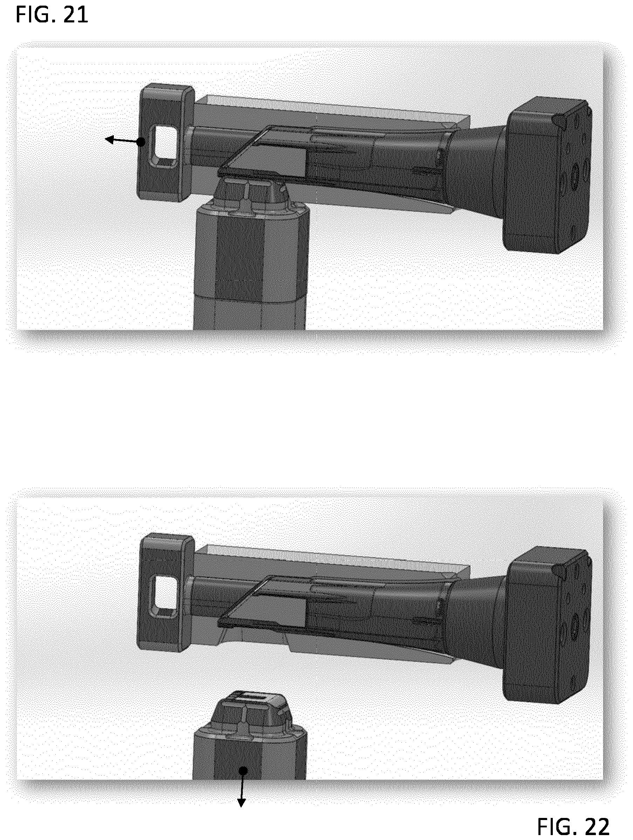

As the polymer flows into the mold cavity 840 it will gradually enclose the wings 322, 324 and into the volume between the sloped edge 340 and the core 810. After the polymer has flowed past a threshold point, $T_1$, in the flow direction, $D_f$, the polymer present in the mold cavity 840 will be sufficient to retain the heat conducting element 300. At this point, the longitudinally displaceable part 822 is retracted away from the heat conducting element 300 whereby a volume is created between the longitudinally displaceable part 822 and the heat conducting element 300 as shown in FIG. 21. The polymer may now flow into this volume and form the distal end wall 106 of the sheath body.

After the mold cavity 840 has been filed with the polymer and the polymer is solidified, the transversely displaceable part 824 is retracted away from the optical opening 110 as shown in FIG. 22 so that the core 810 and the now molded sheath body may be extracted from the matrix 820, and the sheath body pulled off the core 810.

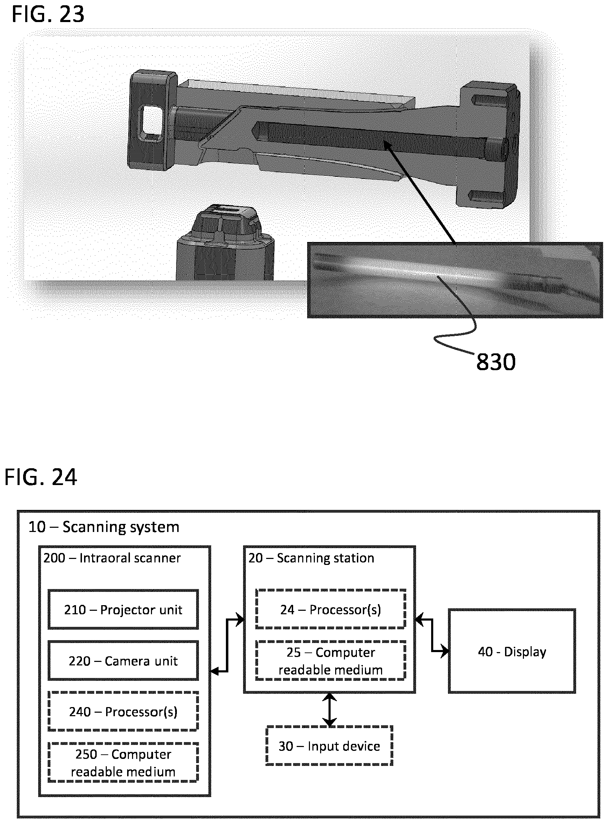

To control the temperature of the mold 800, the mold may comprise temperature regulating means 830. In FIG. 23 the temperature regulating means 830 are provided by an electrical temperature regulating element inserted into the core 810. Alternatively or additionally, the temperature regulating means 830 may comprise steam and/or oil conduits for circulating steam and/or oil in contact with the mold 800 whereby the temperature will be regulated. It is noted that the molding process performed at relatively high temperatures where the fluid polymer injected into the molding cavity 840 may be over 250 degrees Celsius. While the temperature regulating means 830 may themselves be hot by conventional definitions, they may be considered cold relative to the fluid polymer with the temperature regulating means 830 having a temperature between 110 and 170 degrees Celsius. The temperature regulating means 830 may therefore serve as cooling means for the mold 800. The advantage of providing temperature regulating means 830 is that the mold may be kept at the operating temperature required for the polymer used for the sheath body. When starting up the molding process, e.g. at the beginning of the day, this means that the mold 800 is heated faster and during repeated molding it reduces the downtime, thereby reducing costs and ensuring quality of the final sheath body.

FIG. 24 shows a block diagram of a scanning system 10. The scanning system comprises the intraoral scanner 200. The intraoral scanner 200, also referred to as the scanner 200, comprises one or more projector unit(s) 210 for projecting probe light onto a dental object and one or more camera unit(s) for capturing probe light reflected of the dental object of a patient and generating one or more 2D images based on the captured light. During scanning, the projected and reflected light exit/enters the scanner 200 through a scanner window and in the optical path of the scanner the projected and reflected light hits the optical element 112 of the sheath 100. If the optical element 112 is a window of the sheath the projected and reflected light is transmitted through the window of the sheath. If the optical element 112 is a mirror, the projected and reflected light is reflected towards the dental object or the scanner window, respectively.

During a scanning session, the scanner 200 may be operatively connected to a scanning station 20 via a wires or wireless connection. The scanning station 20 comprises a display to display a viewfinder during scanning to help the user in navigating the scanner 200 inside the patient's mouth, and for displaying the 2D image(s) and/or 3D representation from the 2D image(s). The scanning station 20 may also comprise input means, e.g. a touch sensitive area, a keyboard, and/or a mouse, to allow the user to interact with the scanning station 20 and/or scanner 200 during and/or after scanning the patient.

To process the 2D image(s) into scan data, e.g. the 3D representation of the dental object, the scanning system comprises one or more processor(s) 24, 240. The one or more processor(s) 24, 240 may be arranged in the scanner 200, in the scanning station 20, and/or in a remote or local server. The computer implemented method used to cause the processing of the one or more processor(s) 24, 240 may be stored on one or more computer readable medium/media 25, 250. The one or more computer readable medium/media 25, 250 may be arranged in the scanner 200, in the scanning station 20, and/or in a remote or local server.

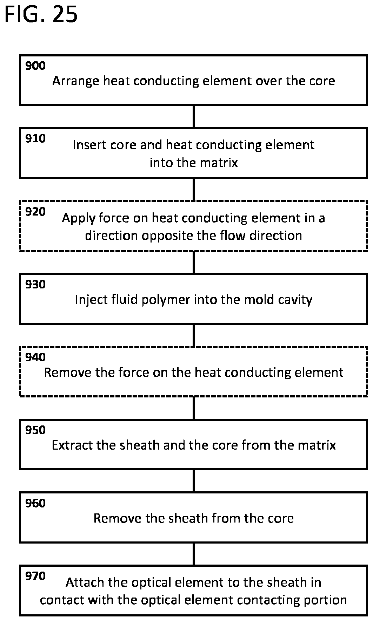

FIG. 25 shows a flowchart of the method for molding and manufacturing process of a sheath 100 of the invention. The method comprises the step 910 of arranging the heat conducting element 300 over the core 810 of the mold 810. As described above, this step may include applying an outwards directed force on the first and second wings 322, 324 to spread them apart while arranging the heat conducting element 300 on the core 810 so that the heat conducting element 300 is in a tensioned state on the core 810 where the first and second wings 322, 324 push inwards on the core to prevent fluid polymer from creeping in between the wings 322, 324 and the core 810.

After the heat conducting element 300 has been arranged on the core 810, the method comprises the step 920 of inserting the core 810 with the heat conducting element 300 arranged on it into the matrix 820 to create a mold cavity 840 defined by the core 810, the heat conducting element 300, and the matrix 820. The form of the mold cavity 840 as defined by the core 810, the heat conducting element 300, and the matrix 820 has the form of the sheath body. The method may comprise the step 920 of applying a force on heat conducting element 300 in a direction opposite the flow direction, $D_f$. If this is done using the longitudinally displaceable part 822, then the mold cavity 840 has the form of the sheath body with the exception of the distal end wall 106 at this stage of the mold process, because the volume where the distal end wall 106 will be formed is occupied by the longitudinally displaceable part 822 until it is retracted.

Having prepared the mold cavity 840, the method comprises the step 930 of injecting the fluid polymer into the mold cavity 840. This is preferably done at an end of the mold cavity 840 corresponding to the proximal end 102 of the sheath body, and/or preferably done at a part of the mold cavity 840 corresponding to the internal cavity of the sheath body. As the polymer flows into the mold cavity 840 the sheath body is molded over the heat conducting element 300 as the polymer gradually encloses the first surface 342 of the wings 322, 324 and the sloped edge 340 on the second surface 344 of the wings 322, 324. The method may comprise the step 940 removing the force on the heat conducting element 300 in the direction opposite the flow direction, $D_f$. If this is done using the longitudinally displaceable part 822, then the longitudinally displaceable part 822 is retracted after the polymer has flowed past the threshold point, $T_1$, in the flow direction, $D_f$, whereby the volume of the mold cavity 840 that will form the distal end wall 106 is freed up.

After the polymer has filled the mold cavity 840 and solidified, the method comprises the step 950 of extracting the core 810 from the matrix 820 along with the sheath body which now retains the heat conducting element 300 due to the one or more one or more overhanging protrusions formed integrally with the sheath body by the molding process. At this point, the sheath body enclosed the entire first surface 342 of the metal body of the heat conducting element 300 and the sloped edge 340 of the second surface 344 of the metal body of the heat conducting element 300 whereby the heat conducting element 300 is attached to the sheath body. The method then comprises the step 960 of removing the sheath body with the heat conducting element 300 attached to it from the core 810. After molding, the process may comprise annealing the sheath body and heat conducting element to remove as much residual stress caused by the molding process. Annealing may also further improve the chemical resistance of the PSU plastic towards hard chemicals such as alcohols and others that dentists use for cleaning.

The method further comprises the step 970 of attaching the optical element 112 the sheath body in a position where the optical element 112 is in contact with the optical element contacting portion 310 of the heat conducting element 300. This step may comprise applying glue to the optical element contacting portion 310 and positioning the optical element 112 against the the optical element abutment protrusion(s) 312. After the glue has cured, the sheath 100 now comprises its main components, i.e. the sheath body, the heat conducting element, and the optical element 112.

It is contemplated that the attachment of the optical element 112 may be done as part of the molding processes. If the optical element 112 is provided by a mirror, then this could include arranging the mirror between the core 810 and the heat conducting element in step 900 provided that the mirror can withstand the temperatures of the molding processes and stress in excess of 2500 bar. This could involve gluing the mirror onto the optical element contacting portion 310 before arranging it on the core 810. If the optical element 112 is provided by a sheath window, then this could also be formed as a step in the molding process, e.g. by retracting the transversely displaceable part 824 to a point where it is substantially flush with the external surface of the sidewall 108 so that a new molding cavity defined by the optical opening 110, the core 810 and the transversely displaceable part 824 is formed. A transparent polymer can then be injected into the new molding cavity to form the window in the optical opening 110.

## Further details

Embodiments of the invention are disclosed in the following list of enumerated items:

1. A sheath for covering the tip of an intraoral scanner, wherein the sheath comprises:

- a sheath body comprising:

  ◦ a proximal end having a proximal opening configured for receiving the tip,
  ◦ a distal end having a distal end wall,
  ◦ a sidewall extending between the proximal and distal ends,
  ◦ an internal cavity configured for at least partially accommodating the tip, the internal cavity being defined by an internal surface of the distal end wall and by an internal surface of the sidewall, and
  ◦ an optical opening extending through the sidewall,

- an optical element arranged so that is arranged in an optical path of the intraoral scanner when the sheath is mounted on the tip.

2. The sheath of item 1, wherein the sheath further comprises:

- a heat conducting element in contact with the optical element, the heat conducting element being configured for contacting a heating element of the intraoral scanner and conducting heat from the heating element to the optical element.

3. The sheath of item 2, wherein the sheath body comprises one or more overhanging protrusions formed integrally with the sheath body, wherein the one or more overhanging protrusions extend over at least part of the heat conducting element, wherein the heat conducting element is retained by the sidewall and/or the distal end wall and the one or more overhanging protrusions.

4. The sheath of any of the previous items, wherein the heat conducting element comprises a first surface facing the distal end wall and/or the sidewall and a second surface facing the internal cavity, wherein the second surface is substantially flush with the internal surface of the distal end wall and/or with the internal surface of the sidewall.

5. The sheath of the previous items, wherein a part of the heat conducting element is sandwiched between the one or more overhanging protrusions and the sidewall and/or end wall.

6. The sheath of any of the previous items, wherein the optical element is a mirror configured to direct the optical path of the intraoral scanner towards the optical opening.

7. The sheath of any of the previous items, wherein the optical element is a window configured to allow transmission of light.

8. The sheath of any of the previous items, wherein the heat conducting element comprises a metal body, the metal body comprising:

- a first surface configured for facing an internal surface of a distal end wall of the sheath and/or for facing an internal surface of a sidewall of the sheath,
- a second surface configured for facing an internal cavity of the sheath, wherein the second surface comprise one or more sloped or curved edge(s),
- an optical element contacting portion configured for contacting an optical element of the sheath,
- a heating element contacting portion configured for contacting a heating element of the intraoral scanner.

9. The sheath of any of the previous items, wherein the one or more overhanging protrusions extend over the one or more sloped or curved edge(s).

10. The sheath of any of the previous items, wherein the sheath body is overmolded over the heat conducting element.

11. The sheath of any of the previous items, wherein the heating element contacting portion is provided by a first wing and a second wing, the first and second wings extending from the optical element contacting portion.

12. The sheath of the previous items, wherein the optical element contacting portion has a height, and wherein each of the first and second wings form a connection portion to the heating element contacting portion, said contacting portion extending over 10-50% of the height of the optical element contacting portion.

13. The sheath of the previous items, wherein each of the first and second wings tappers in height towards the optical element contacting portion.

14. The sheath of the previous items, wherein the optical element contacting portion comprises one or more abutment protrusions arranged on the second surface of the optical element contacting portion, said one or more abutment protrusions being configured for abutting the optical element when the optical element is attached

15. The sheath of the previous items, wherein the metal body is made from aluminum.

16. The sheath of the previous items, wherein the metal body is formed by metal stamping.

17. The sheath of any of the previous items, wherein the sheath body is made from a material having a thermal conductivity above $3\frac{W}{m\cdot K}$ at 25 degrees Celsius.

18. The sheath of item 4, wherein the sheath body is made from a material comprising a polymer and graphite.

19. The sheath of items 4 or 5, wherein the amount of graphite in the material is between 50 and 90% by mass, preferably between 60 and 80/ by mass, more preferably between 65 and 75 % by mass.

20. The sheath of any of items 4-6, wherein the sheath body is configured for contacting a heating element of the intraoral scanner and conducting heat from the heating element to the optical element.

21. An intraoral scanner comprising:

- one or more projector unit(s) configured for projecting probe light onto a dental object,
- one or more camera unit(s) configured for capturing 2D images of the dental object,
- a scanner body housing the one or more projector unit(s) and the one or more camera unit(s), wherein the scanner body comprises a scanner tip configured for being at least partially inserted into the mouth of a patient,
- a heating element, and
- a sheath according to any of the previous items.

22. A scanner system for obtaining a digital 3D representation of a dental object, the scanner system comprising:

- an intraoral scanner according to item 21, and
- one or more processor(s) configured for generating the digital 3D representation based on the 2D images.

23. A heat conducting element for a sheath for covering the tip of an intraoral scanner, the heat conducting element comprising a metal body, the metal body comprising:

- a first surface configured for facing an internal surface of a distal end wall of the sheath and/or for facing an internal surface of a sidewall of the sheath,
- a second surface configured for facing an internal cavity of the sheath, wherein the second surface comprise one or more sloped or curved edges,
- an optical element contacting portion configured for contacting an optical element of the sheath,
- a heating element contacting portion configured for contacting a heating element of the intraoral scanner.

24. The heat conducting element of item 23, wherein the heating element contacting portion is provided by a first wing and a second wing, the first and second wings extending from the optical element contacting portion.

25. The heat conducting element of item 24, wherein each of the first and second wings extend toward a center longitudinal axis of the metal body in an untensioned state of the metal body.

26. The heat conducting element of item 25, wherein each of the first and second wings form an angle below 90 degrees, such as between 85 and 89 degrees, with the center longitudinal axis of the metal body in an untensioned state of the metal body.

27. The heat conducting element of any of items 24-26, wherein the optical element contacting portion has a height, and wherein each of the first and second wings form a connection portion to the heating element contacting portion, said contacting portion extending over 10-40% of the height of the optical element contacting portion.

28. The heat conducting element of any of items 24-27, wherein each of the first and second wings tappers in height towards the optical element contacting portion.

29. The heat conducting element of item of any of items 23-28, wherein the optical element contacting portion comprises one or more abutment protrusions arranged on the second surface of the optical element contacting portion, said one or more abutment protrusions being configured for abutting the optical element when the optical element is attached

30. The heat conducting element of any of items 23-29, wherein the metal body is made from aluminum.

31. The heat conducting element of any of items 23-30, wherein the metal body is formed by metal stamping.

32. A method for manufacturing a sheath for covering the tip of an intraoral scanner, the sheath comprising a sheath body, a heat conducting element, and an optical element, the sheath being configured for covering the tip of an intraoral scanner, the method comprising the steps of:

-    arranging the heat conducting element over a core of the mold;
-    inserting the core into a mold matrix to create a mold cavity defined by the core and the matrix, wherein the mold cavity has the shape of the sheath body;
-    injecting a polymer into the mold cavity whereby the sheath body is molded over the heat conducting element; and
-    attaching the optical element to an optical element contacting portion of the heat conducting element.

33. The method of item 32, wherein the polymer is injected from an end of the molding cavity corresponding to the proximal end of the sheath body.

34. The method of items 32 or 33, wherein the polymer is injected from the core.

35. The method of any of items 32-34, wherein the method comprises the steps of:

-    during the step of injecting the polymer, applying a force on the heat conducting element in a direction substantially opposite the flow direction of the polymer.

36. The method of item 35, wherein the method comprises the steps of:

-    during the step of injecting the polymer, when the polymer has partially enclosed the heat conducting element above a threshold point, $T_1$, removing the force on the heat conducting element in a direction substantially opposite the flow direction of the polymer.

37. The method of items 32-36, wherein the step of attaching the optical element to the optical element contacting portion of the heat conducting element comprises applying glue to the optical element contacting portion and bringing the optical element into contact with one or more optical element abutment protrusions arranged on the optical element contacting portion.

38. The method of items 32-37, wherein the polymer is selected from the group consisting of Polysulfone, PSU, Polypropylene (PP), Polyetheretherketone (PEEK), Polycarbonate (PC), Polytetrafluoroethylene (PTFE, Teflon), Polyethylene Terephthalate (PET), Polyetherimide (PEI, Ultem), and High-Density Polyethylene (HDPE), or any combination thereof.

39. The method of items 32-38, wherein the method comprises the step of:

-    regulating the temperature of the mold.

40. The method of item 39, wherein the step of regulating the temperature of the mold is performed using heat exchange between the mold and one or more of the following: heated oil, heated water, an electrical heating element, or any combination thereof.

41. The method of items 32-40, wherein the heat conducting element is made by metal stamping.

42. The method of items 32-41, wherein the heat conducting element is made from a material selected from the group consisting of Aluminum, Aluminum alloys, Cupper, Brass, Bronze, Magnesium, Iron, Iron alloys, or any combination thereof.

43. The method of items 32-42, wherein the step of injecting a polymer into the mold cavity comprises at least partially enclosing two opposing surfaces of the heat conducting element with the polymer.

44. The method of item 43, wherein a first surface, which faces the matrix, of the heat conducting element is substantially fully enclosed by the polymer, and wherein a second surface, which faces the core, of the heat conducting element is enclosed on a sloped and/or curved edge of the second surface.

**List of references**

| | | | |
|---|---|---|---|
| 10 | Scanning system | 502 | Proximal end |
| 20 | Scanning station | 504 | Distal end |
| 24 | Processor | 506 | Distal end wall |
| 25 | Computer readable medium | 508 | Sidewall |
| 30 | Input device | 510 | Optical opening |
| 40 | Display | 512 | Optical element |
| 100 | Sheath | 600 | Sheath |
| 102 | Proximal end | 602 | Proximal end |
| 104 | Distal end | 604 | Distal end |
| 106 | Distal end wall | 606 | Distal end wall |
| 108 | Sidewall | 608 | Sidewall |
| 110 | Optical opening | 610 | Optical opening |
| 112 | Optical element | 700 | Sheath |
| 140 | Overhanging protrusion | 702 | Proximal end |
| 142 | External surface | 704 | Distal end |
| 144 | Internal surface | 706 | Distal end wall |
| 200 | Intraoral scanner | 708 | Sidewall |
| 202 | Scanner tip | 710 | Optical opening |
| 204 | Scanner body | 712 | Optical element |
| 206 | Heating element | 800 | Mold |
| 210 | Projector unit | 810 | Core |
| 220 | Camera unit | 820 | Matrix |
| 240 | Processor | 822 | Longitudinally displaceable part |
| 250 | Computer readable medium | 824 | Transversely displaceable part |
| 300 | Heat conducting element | 830 | Temperature regulating means |
| 310 | Optical element contacting portion | 840 | Mold cavity |
| 312 | Optical element abutment protrusion | 900 | Arrange heat conducting element over the core |
| 314 | Means for attachment during molding | 910 | Insert core and heat conducting element into the matrix |
| 322 | First wing | 920 | Apply force on heat conducting element in a direction opposite the flow direction |
| 324 | Second wing | 930 | Inject fluid polymer into the mold cavity |
| 326 | Heating element contacting portion | 940 | Remove the force on the heat conducting element |
| 332 | First connection portion | 950 | Extract the sheath and the core from the matrix |
| 334 | Second connection portion | 960 | Remove the sheath from the core |
| 340 | Sloped edge | 970 | Attach the optical element to the sheath in contact with the optical element contacting portion |
| 400 | Sheath | H1 | Height of optical element contacting portion |
| 402 | Proximal end | H2 | Height of connection portion |

(continued)

| | | | |
|---|---|---|---|
| 404 | Distal end | Ha | Height direction of optical element contacting portion |
| 406 | Distal end wall | Wa | Width direction of optical element contacting portion |
| 408 | Sidewall | L1 | Length of wings |
| 410 | Optical opening | Lb | Length direction of wings |
| 412 | Optical element | Hb | Height direction of wings |
| 414 | Attachment means | Lm | Longitudinal direction of mold |
| 420 | Second sidewall | Tm | Transverse direction of mold |
| 430 | Opening | Df | Primary flow direction |
| 500 | Sheath | T1 | Threshold |

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It is to be noted that the word "comprising" does not necessarily exclude the presence of other elements or steps than those listed. It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

Although embodiments and features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

## Claims

1. A method for manufacturing a sheath comprising a sheath body, a heat conducting element, and an optical element, the sheath being configured for covering the tip of an intraoral scanner, the method comprising the steps of:

   - arranging the heat conducting element over a core of the mold;
   - inserting the core into a mold matrix to create a mold cavity defined by the core and the matrix, wherein the mold cavity has the shape of the sheath body;
   - injecting a polymer into the mold cavity whereby the sheath body is molded over the heat conducting element; and
   - attaching the optical element to an optical element contacting portion of the heat conducting element.

2. The method of claim 1, wherein the polymer is injected from an end of the molding cavity corresponding to the proximal end of the sheath body and/or wherein the polymer is injected from the core.

3. The method of claims 1 or 2, wherein the method, during the step of injecting the polymer, comprises the steps of:

   - applying a force on the heat conducting element in a direction substantially opposite the flow direction of the polymer, and

- when the polymer has partially enclosed the heat conducting element above a threshold point, T1, removing the force on the heat conducting element in a direction substantially opposite the flow direction of the polymer.

4. The method of any of the previous claims, wherein the step of injecting a polymer into the mold cavity comprises at least partially enclosing two opposing surfaces of the heat conducting element with the polymer.

5. The method of claim 4, wherein a first surface of the heat conducting element, which faces the matrix, is substantially fully enclosed by the polymer, and wherein a second surface of the heat conducting element, which faces the core, is substantially only enclosed on a sloped and/or curved edge of the second surface.

6. A sheath for covering the tip of an intraoral scanner, wherein the sheath comprises:

- a sheath body comprising:

∘ a proximal end having a proximal opening configured for receiving the tip,
∘ a distal end having a distal end wall,
∘ a sidewall extending between the proximal and distal ends,
∘ an internal cavity configured for at least partially accommodating the tip, the internal cavity being defined by an internal surface of the distal end wall and by an internal surface of the sidewall, and
∘ an optical opening extending through the sidewall,

- an optical element arranged so that is in an optical path of the intraoral scanner when the sheath is mounted on the tip,
- a heat conducting element in contact with the optical element, the heat conducting element being configured for contacting a heating element of the intraoral scanner and conducting heat from the heating element to the optical element,

wherein the sheath body comprises one or more overhanging protrusions formed integrally with the sheath body, wherein the one or more overhanging protrusions extend over at least part of the heat conducting element, wherein the heat conducting element is retained by the sidewall and/or the distal end wall and the one or more overhanging protrusions.

7. The sheath of claim 6, wherein the heat conducting element comprises a first surface facing the distal end wall and/or the sidewall and a second surface facing the internal cavity, wherein the second surface is substantially flush with the internal surface of the distal end wall and/or with the internal surface of the sidewall.

8. The sheath of claims 6 or 7, wherein a part of the heat conducting element is sandwiched between the one or more overhanging protrusions and the sidewall and/or end wall.

9. The sheath of any of claims 6-8, wherein the optical element is a mirror configured to direct the optical path of the intraoral scanner towards the optical opening.

10. The sheath of any of claims 6-9, wherein the heat conducting element comprises:

- a first surface configured for facing an internal surface of a distal end wall of the sheath and/or for facing an internal surface of a sidewall of the sheath,
- a second surface configured for facing an internal cavity of the sheath, wherein the second surface comprise one or more sloped or curved edge(s),
- an optical element contacting portion configured for contacting an optical element of the sheath,
- a heating element contacting portion configured for contacting a heating element of the intraoral scanner,

wherein the one or more overhanging protrusions extend over the one or more sloped or curved edge(s).

11. The sheath of any of claim 10, wherein the heating element contacting portion is provided by a first wing and a second wing, the first and second wings extending from the optical element contacting portion.

12. The sheath of claim 11, wherein the optical element contacting portion has a height, and wherein each of the first and second wings form a connection portion to the heating element contacting portion, said contacting portion extending over 10-50% of the height of the optical element contacting portion.

13. The sheath of any of claims 10-12, wherein the optical element contacting portion comprises one or more abutment protrusions arranged on the second surface of the optical element contacting portion, said one or more abutment protrusions abutting the optical.

14. An intraoral scanner comprising:

- one or more projector unit(s) configured for projecting probe light onto a dental object,
- one or more camera unit(s) configured for capturing 2D images of the dental object,
- a scanner body housing the one or more projector unit(s) and the one or more camera unit(s), wherein the scanner body comprises a scanner tip configured for being at least partially inserted into the mouth of a patient,
- a heating element, and
- a sheath according to any of claims 6-13.

15. A scanner system for obtaining a digital 3D representation of a dental object, the scanner system comprising:

- an intraoral scanner according to claim 14, and
- one or more processor(s) configured for generating the digital 3D representation based on the 2D images.

FIG. 1

200

204

100

100  102
106
104
108
110  202  204

FIG. 2

FIG. 3

FIG. 4

FIG. 5

FIG. 6

FIG. 7

502

500

506

508

510

504

202

512

508

510

FIG. 8

FIG. 9

602

600

606

604

608

610

FIG. 10

FIG. 11

702

708

706

704

710

700

202

712

300

706

708

710

FIG. 12

FIG. 13a

FIG. 13b

FIG. 13c

FIG. 13d

FIG. 14

FIG. 15a

FIG. 15b

FIG. 16a

FIG. 16b

0,02 max.
Forming step max

( R0,1 )

( 0,3 )

( 40° )

C (70 : 1)

FIG. 16c

FIG. 16d

D (10 : 1)

2x
−0,1
−0,4

(2,5)

D

FIG. 16e

FIG. 17

108

322

310

324

104

144

140

106;108

340

342

344

300

142

140

340

FIG. 18

FIG. 19

FIG. 20

FIG. 21

FIG. 22

# FIG. 23

830

# FIG. 24

10 – Scanning system

| 200 – Intraoral scanner | 20 – Scanning station |
|---|---|
| 210 – Projector unit | 24 – Processor(s) |
| 220 – Camera unit | 25 – Computer readable medium |
| 240 – Processor(s) | 40 - Display |
| 250 – Computer readable medium | 30 – Input device |

# FIG. 25

```
900
   Arrange heat conducting element over the core
```

```
910    Insert core and heat conducting element
              into the matrix
```

```
920   Apply force on heat conducting element in a
          direction opposite the flow direction
```

```
930
      Inject fluid polymer into the mold cavity
```

```
940
   Remove the force on the heat conducting element
```

```
950
   Extract the sheath and the core from the matrix
```

```
960
         Remove the sheath from the core
```

```
970   Attach the optical element to the sheath in
      contact with the optical element contacting portion
```

| | Europäisches Patentamt European Patent Office Office européen des brevets | **EUROPEAN SEARCH REPORT** | **Application Number** EP 24 20 6451 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/218149 A1 (HANSEN KASPER KROGH [DK] ET AL) 13 July 2023 (2023-07-13) * paragraph [0106] * * figure 1 * ----- | 1-15 | INV. A61C1/16 A61C9/00 |
| A | US 2024/033029 A1 (SHALEV ARIEL [IL] ET AL) 1 February 2024 (2024-02-01) * paragraphs [0007], [0008] * ----- | 1-15 | |

TECHNICAL FIELDS SEARCHED (IPC)

A61C

The present search report has been drawn up for all claims

| Place of search | Date of completion of the search | Examiner |
|---|---|---|
| Munich | 17 March 2025 | Kerner, Bodo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 725 445 A1**

## ANNEX TO THE EUROPEAN SEARCH REPORT
## ON EUROPEAN PATENT APPLICATION NO.

EP 24 20 6451

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | | Publication date | Patent family member(s) | | Publication date |
|---|---|---|---|---|---|
| US 2023218149 | A1 | 13-07-2023 | CN | 115916029 A | 04-04-2023 |
| | | | EP | 4266974 A1 | 01-11-2023 |
| | | | KR | 20230121961 A | 22-08-2023 |
| | | | US | 2023218149 A1 | 13-07-2023 |
| | | | WO | 2022136268 A1 | 30-06-2022 |
| US 2024033029 | A1 | 01-02-2024 | AU | 2020319629 A1 | 10-02-2022 |
| | | | CA | 3148808 A1 | 04-02-2021 |
| | | | CN | 114206253 A | 18-03-2022 |
| | | | EP | 3979901 A1 | 13-04-2022 |
| | | | US | 2021030503 A1 | 04-02-2021 |
| | | | US | 2024033029 A1 | 01-02-2024 |
| | | | WO | 2021021854 A1 | 04-02-2021 |

EPO FORM P0459

For more details about this annex : see Official Journal of the European Patent Office, No. 12/82